(19) Europäisches Patentamt
European Patent Office
Office européen des brevets

(11) EP 4 769 528 A1

(12) **EUROPEAN PATENT APPLICATION**
published in accordance with Art. 153(4) EPC

(43) Date of publication:
01.07.2026 Bulletin 2026/27

(21) Application number: 25845057.6

(22) Date of filing: 11.07.2025

(51) International Patent Classification (IPC):
H01M 4/133 (2010.01)   H01M 4/134 (2010.01)
H01M 4/587 (2010.01)   H01M 4/36 (2006.01)
H01M 4/38 (2006.01)    H01M 4/48 (2010.01)
H01M 4/1393 (2010.01)  H01M 4/1395 (2010.01)
H01M 4/04 (2006.01)    H01F 7/02 (2006.01)

(52) Cooperative Patent Classification (CPC):
H01F 7/02; H01M 4/02; H01M 4/04; H01M 4/133;
H01M 4/134; H01M 4/1393; H01M 4/1395;
H01M 4/36; H01M 4/38; H01M 4/48; H01M 4/587;
Y02E 60/10

(86) International application number:
PCT/KR2025/010181

(87) International publication number:
WO 2026/023960 (29.01.2026 Gazette 2026/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 24.07.2024 KR 20240097947
24.10.2024 KR 20240146303
14.02.2025 KR 20250019146

(71) Applicant: LG Energy Solution, Ltd.
Seoul 07335 (KR)

(72) Inventors:
• LIM, Dong Ju
Daejeon 34122 (KR)
• OH, Hyun Hee
Daejeon 34122 (KR)
• KIM, So Yeon
Daejeon 34122 (KR)

(74) Representative: Plasseraud IP
104 Rue de Richelieu
CS92104
75080 Paris Cedex 02 (FR)

(54) **NEGATIVE ELECTRODE FOR LITHIUM SECONDARY BATTERY AND METHOD FOR MANUFACTURING SAME**

(57) The present disclosure relates to a negative electrode and a method of manufacturing the same. The negative electrode includes a silicon-based negative electrode active material together with a carbon-based negative electrode active material to have excellent charge and discharge capacity and energy density, and has advantages of excellent rapid charging performance and lifespan characteristics as the carbon-based negative electrode active material included in each negative electrode active layer is oriented to have a predetermined inclination with respect to the negative electrode current collector.

[FIG. 2]

Example 3

the 1st negative electrode active layer | the 2nd negative electrode active layer

5,00kV   WD=7.0mm   X1.2k   10μm    5,00kV   WD=7.0mm   X1.2k   10μm

## Description

[Technical Field]

The present disclosure relates to a negative electrode for a lithium secondary battery and a manufacturing method thereof.

This application claims the benefit of priority from Korean Patent Application No. 10-2024-0097947, filed on July 24, 2024, Korean Patent Application No. 10-2024-0146303, filed on October 24, 2024, and Korean Patent Application No. 10-2025-0019146, filed on February 14, 2025, the entire contents disclosed therein are incorporated by reference into this disclosure.

[Background]

Lithium secondary batteries have been widely applied not only to small devices such as portable electronic devices but also to medium and large-sized devices such as battery packs for hybrid vehicles or electric vehicles, and power storage devices. As interest in environmental issues has recently grown, the demand base for high-capacity batteries is expanding due to the growth of the market for high-capacity battery-employing devices such as electric vehicles and hybrid electric vehicles, which can replace vehicles using fossil fuels such as gasoline vehicles and diesel vehicles, which are one of the main causes of air pollution.

Generally, a lithium secondary battery is a power generation element capable of charge and discharge, which has a stacked structure of positive electrode/separator/negative electrode. When a lithium secondary battery is charged, a lithium deintercalation reaction is induced in which lithium contained in the positive electrode active material is oxidized and released at the positive electrode inside the battery, and a lithium insertion reaction occurs in which lithium is reduced and enters the negative electrode active material at the negative electrode. Generally, since the deintercalation reaction in the positive electrode active material is faster than the insertion reaction in the negative electrode active material, performance such as speed during charge and discharge of the lithium secondary battery is mainly determined by the negative electrode.

Materials including graphite are widely used as the negative electrode active material of the negative electrode. An average potential when materials including graphite release lithium is about 0.2 V (based on Li/Li$^+$), and the discharge potential exhibits a relatively flat aspect. Due to this, when graphite is used as a negative electrode active material, the voltage of the secondary battery has the advantages of being high and constant. However, the electrical capacity per unit mass of the graphite material is as small as 372 mAh/g. On the other hand, since the capacity of the graphite material has currently been improved close to the theoretical capacity, additional capacity increase is difficult. In addition, when graphite is used as the negative electrode active material, there is a limitation that rapid charging performance is low compared to the case of applying other negative electrode active materials because the insertion reaction of lithium ions proceeds at a slow speed.

Meanwhile, in order to increase the capacity and improve rapid charging performance of lithium secondary batteries, various negative electrode active materials are being studied. As an example thereof, it has become known that silicon (Si) can reversibly adsorb and release a large amount of lithium through a compound formation reaction with lithium, and many studies on this are being conducted recently. Since silicon has a theoretical maximum capacity of about 4020 mAh/g (9800 mAh/cc, specific gravity 2.23), which is very large compared to graphite-based materials, there is a useful advantage as a high energy density and/or high capacity negative electrode material. However, silicon not only induces a large volume change (~300%) of the negative electrode when charging the secondary battery, but also the high-rate discharge characteristics are not high. In addition, when silicon oxides such as silicon carbide (SiC), SiO, or SiO$_2$ are used as a negative electrode active material, they have high electrical resistance at temperature conditions performed during charge and discharge of the secondary battery and may act as a resistor. This promotes degradation of the negative electrode active layer as the cycle of the secondary battery progresses, so there is a limitation that the lifespan characteristics of the negative electrode are significantly reduced.

Accordingly, there is a demand for the development of technology for a negative electrode for a lithium secondary battery with excellent rapid charging performance and improved energy density and lifespan characteristics.

[Related Art Document]

[Patent Document]

Korean Patent Laid-Open Publication No. 10-2024-0084840

[Summary]

[Technical Problem]

An object of the present disclosure is to provide a negative electrode with excellent rapid charging performance and excellent energy density and excellent lifespan characteristics, and a method of manufacturing the same.

[Technical Solution]

The present disclosure provides a negative electrode including:

a negative electrode current collector;
a first negative electrode active layer provided on at least one surface of the negative electrode current collector and comprising a first carbon-based negative electrode active material; and
a second negative electrode active layer provided on the first negative electrode active layer and comprising a second carbon-based negative electrode active material and a silicon-based negative electrode active material;
wherein, when analyzing a thickness direction cross-section of an entire negative electrode active layer comprising the first negative electrode active layer and the second negative electrode active layer by scanning electron microscopy, the first carbon-based negative electrode active material and the second carbon-based negative electrode active material satisfy Equation 1 below:

$$[\text{Equation 1}]$$

$$0.1 \leq SL_{60\text{-}120}/FL_{60\text{-}120} < 1.0$$

In the above Equation 1,

wherein $FL_{60\text{-}120}$ represents a percentage (unit: %) of the first carbon-based negative electrode active material in which an angle formed between a major axis of the first carbon-based negative electrode active material and a surface of the negative electrode current collector is greater than 60° and 120° or less among the first carbon-based negative electrode active material,
wherein $SL_{60\text{-}120}$ represents a percentage (unit: %) of the second carbon-based negative electrode active material in which an angle formed between a major axis of the second carbon-based negative electrode active material and a surface of the negative electrode current collector is greater than 60° and 120° or less among the second carbon-based negative electrode active material, and
wherein the major axis of the carbon-based negative electrode active material means a longest line segment among line segments passing through a center of the corresponding carbon-based negative electrode active material in an image photographed by scanning electron microscopy.

Here, the negative electrode may satisfy any one or more of Equation 2 and Equation 3 below when analyzed by scanning electron microscopy for the thickness direction cross-section:

$$[\text{Equation 2}]$$

$$40 \leq FL_{30\text{-}150} \leq 70$$

$$[\text{Equation 3}]$$

$$5 \leq SL_{60\text{-}120} \leq 20$$

In the above Equation 2 and Equation 3,

wherein $FL_{30\text{-}150}$ represents a ratio (unit: %) of the first carbon-based negative electrode active material in which an angle formed between a major axis of the first carbon-based negative electrode active material and a surface of the negative electrode current collector is greater than 30° and 150° or less among the first carbon-based negative electrode active material,
wherein $SL_{60\text{-}120}$ represents a ratio (unit: %) of the second carbon-based negative electrode active material in which an angle formed between a major axis of the second carbon-based negative electrode active material and a surface of the negative electrode current collector is greater than 60° and 120° or less among the second carbon-based negative electrode active material, and

wherein the major axis of the carbon-based negative electrode active material means a longest line segment among line segments passing through a center of the corresponding carbon-based negative electrode active material in an image photographed by scanning electron microscopy.

The silicon-based negative electrode active material may include one or more selected from silicon (Si), silicon carbide (SiC), a composite containing silicon (Si) and carbon (C), and silicon oxide ($SiO_q$, where $0.5 \leq q \leq 2.5$).

The content of the silicon-based negative electrode active material may be 0.1 wt.% to 30 wt.% based on the weight of the entire negative electrode active layer.

An average particle diameter ($D_{50}$) of the silicon-based negative electrode active material may be in a range of 1 $\mu$m to 20 $\mu$m.

The first carbon-based negative electrode active material and the second carbon-based negative electrode active material each may include one or more selected from natural graphite, artificial graphite, Kish graphite, pyrolytic carbon, carbon microbeads, mesophase calcined carbon based on tar and pitch, and graphitized coke.

Any one or more of the first carbon-based negative electrode active material and the second carbon-based negative electrode active material may include graphite having a total pore volume in a range of $1 \times 10^{-5}$ cm$^3$/g to $1 \times 10^{-1}$ cm$^3$/g.

The content of the graphite having a total pore volume in a range of $1 \times 10^{-5}$ cm$^3$/g to $1 \times 10^{-1}$ cm$^3$/g may be in a range of 10 wt.% to 70 wt.% based on the total weight of the first carbon-based negative electrode active material or the second carbon-based negative electrode active material.

In addition, a total thickness of the first negative electrode active layer and the second negative electrode active layer may be in an average range of 50 $\mu$m to 400 $\mu$m, and an average thickness of the second negative electrode active layer may have a ratio in a range of 80% to 150% based on an average thickness of the first negative electrode active layer.

Furthermore, the present disclosure provides a method of manufacturing a negative electrode comprising:

coating a first negative electrode slurry comprising a first carbon-based negative electrode active material on at least one surface of a negative electrode current collector (S1);

coating a second negative electrode slurry comprising a second carbon-based negative electrode active material and a silicon-based negative electrode active material on the coated first negative electrode slurry (S2); and

applying a magnetic field to the coated first negative electrode slurry and second negative electrode slurry (S3);

wherein, when analyzing a thickness direction cross-section of an entire negative electrode active layer comprising the first negative electrode active layer and the second negative electrode active layer by scanning electron microscopy, the first carbon-based negative electrode active material and the second carbon-based negative electrode active material satisfy Equation 1 below:

[Equation 1]

$$0.1 \leq SL_{60\text{-}120}/FL_{60\text{-}120} < 1.0$$

In the above Equation 1,

wherein $FL_{60\text{-}120}$ represents a percentage of the first carbon-based negative electrode active material in which an angle formed between a major axis of the first carbon-based negative electrode active material and a surface of the negative electrode current collector is greater than 60° and 120° or less among the first carbon-based negative electrode active material,

wherein $SL_{60\text{-}120}$ represents a percentage of the second carbon-based negative electrode active material in which an angle formed between a major axis of the second carbon-based negative electrode active material and a surface of the negative electrode current collector is greater than 60° and 120° or less among the second carbon-based negative electrode active material, and

wherein the major axis of the carbon-based negative electrode active material means a longest line segment among line segments passing through a center of the corresponding carbon-based negative electrode active material in an image photographed by scanning electron microscopy.

Here, the silicon-based negative electrode active material may include one or more selected from silicon (Si), silicon carbide (SiC), a composite containing silicon (Si) and carbon (C), and silicon oxide ($SiO_q$, where $0.5 \leq q \leq 2.5$).

The first carbon-based negative electrode active material and the second carbon-based negative electrode active material each may include one or more selected from natural graphite, artificial graphite, Kish graphite, pyrolytic carbon, carbon microbeads, mesophase calcined carbon based on tar and pitch, and graphitized coke.

Any one or more of the first carbon-based negative electrode active material and the second carbon-based negative electrode active material may include graphite having a total pore volume in a range of $1 \times 10^{-5}$ cm$^3$/g to $1 \times 10^{-1}$ cm$^3$/g.

The magnetic field may be performed at a magnetic field strength of 1,000 G to 12,000 G.

[Advantageous Effects]

The negative electrode according to the present disclosure includes a silicon-based negative electrode active material together with a carbon-based negative electrode active material, thereby having excellent charge and discharge capacity and high energy density. In addition, since a magnetic field is applied during manufacturing to reduce the tortuosity of the entire negative electrode active layer, the negative electrode has excellent rapid charging performance and lifespan characteristics.

[Brief Description of the Drawings]

FIG. 1 is a conceptual diagram illustrating an inclination between a major axis of a carbon-based negative electrode active material and a negative electrode current collector.

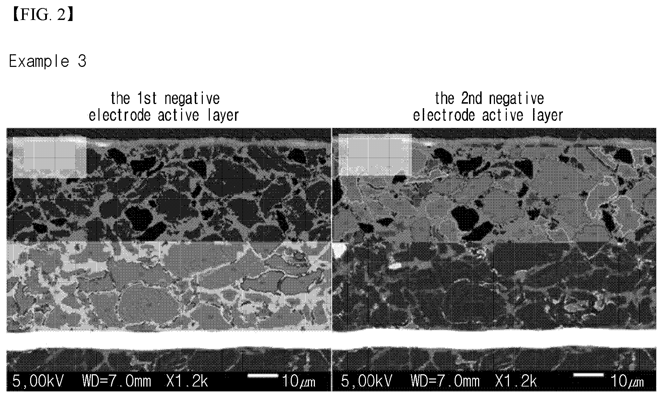

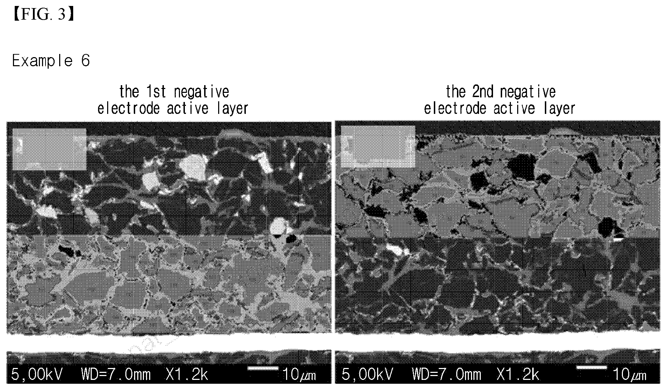

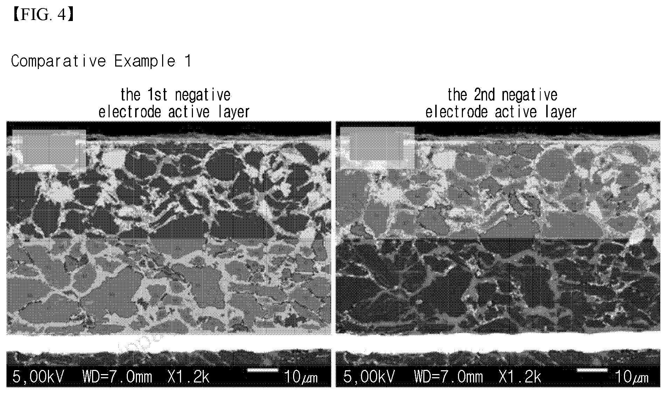

FIG. 2 to FIG. 4 are images of a thickness direction cross-section of a negative electrode manufactured in Examples and Comparative Examples according to the present disclosure photographed by scanning electron microscopy (SEM).

[Detailed Description]

The present disclosure may have various modifications and various embodiments, and specific embodiments will be described in detail in the following detailed description.

In the present disclosure, the terms "comprise" or "have" designate the presence of characteristics, numbers, steps, actions, components, parts, or a combination thereof described in the specification, and it should be understood that the possibility of the presence or addition of one or more other characteristics, numbers, steps, actions, components, parts, or a combination thereof is not excluded in advance.

In addition, in this specification, "average particle diameter ($D_{50}$)" means a particle diameter at which a cumulative value becomes 50% in a particle diameter distribution of particles, and is also referred to as median diameter. The average particle diameter can be measured by a method conventionally applied in the art. For example, the average particle diameter can be measured using a particle size analyzer or an analyzer using a laser diffraction scattering particle size distribution measurement method. In the present disclosure, it may be a value measured by an analytical instrument using a laser diffraction scattering particle size distribution measurement method.

Furthermore, in this specification, "the carbon-based negative electrode active material is oriented" means that, when the carbon-based negative electrode active material is two-dimensionally projected, a longest line segment passing through a particle center (i.e., the major axis) is distributed to have a predetermined directionality with respect to a surface of the negative electrode current collector.

In addition, "the carbon-based negative electrode active material has high orientation" may mean that the carbon-based negative electrode active material contained in the negative electrode active layer is aligned with high frequency with respect to the surface of the negative electrode current collector, and in some cases, may mean that the carbon-based negative electrode active material contained in the negative electrode active layer is aligned at a high angle with respect to the surface of the negative electrode current collector.

Furthermore, in this specification, "include as a main component" may mean including a defined component in an amount of 50 wt.% or more (or 50 vol.% or more), 60 wt.% or more (or 60 vol.% or more), 70 wt.% or more (or 70 vol.% or more), 80 wt.% or more (or 80 vol.% or more), 90 wt.% or more (or 90 vol.% or more), or 95 wt.% or more (or 95 vol.% or more) based on a total weight (or total volume). For example, "include a carbon-based negative electrode active material as a main component" may mean including 50 wt.% or more, 60 wt.% or more, 70 wt.% or more, 80 wt.% or more, 90 wt.% or more, or 95 wt.% or more based on a total of 100 parts by weight of the negative electrode active layer, the negative electrode active material, and/or the negative electrode slurry. In some cases, it may mean that the entire negative electrode active layer, the negative electrode active material, and/or the negative electrode slurry consists of the carbon-based negative electrode active material and is included in an amount of 100 wt.%.

Hereinafter, the present disclosure will be described in more detail.

Negative **Electrode**

The present disclosure provides a negative electrode including:

a negative electrode current collector;
a first negative electrode active layer provided on at least one surface of the negative electrode current collector and comprising a first carbon-based negative electrode active material; and
a second negative electrode active layer provided on the first negative electrode active layer and comprising a second carbon-based negative electrode active material and a silicon-based negative electrode active material.

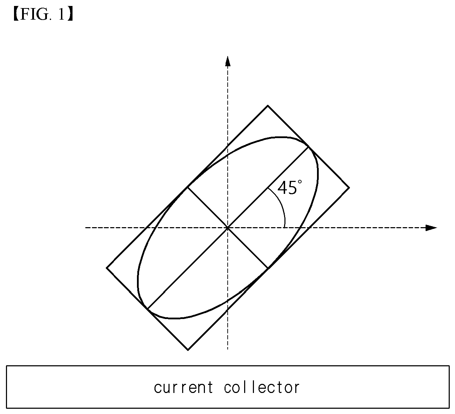

The negative electrode according to the present disclosure means a negative electrode for a lithium secondary battery. The negative electrode includes a negative electrode active layer on at least one surface of a negative electrode current collector. The negative electrode active layer is a layer that implements electrical activity of the negative electrode, and is manufactured by coating a negative electrode slurry comprising a negative electrode active material that implements an electrochemical oxidation-reduction reaction during charge and discharge of a battery on at least one surface of the negative electrode current collector, and then drying and rolling the same.
The negative electrode active layer may have a two-layer structure in which a first negative electrode active layer and a second negative electrode active layer are sequentially stacked on the negative electrode current collector. The negative electrode active layer having the two-layer structure can easily control the composition of each layer. Therefore, the negative electrode active layer can improve performance of the negative electrode by controlling the type or content of components contained in each layer according to a specific purpose such as increasing energy efficiency of the secondary battery or improving adhesion between the active layer and the current collector. For example, the negative electrode active layer may selectively include a silicon-based negative electrode active material having high charge and discharge capacity of the battery only in the second negative electrode active layer that is in contact with the positive electrode. In addition, the negative electrode active layer may selectively include natural graphite or the like having good adhesiveness as a negative electrode active material only in the first negative electrode active layer that is in contact with the negative electrode current collector, or may include a binder that imparts binding property of components constituting the active layer in a higher content ratio than the second negative electrode active layer.
In the present disclosure, the first negative electrode active layer includes a first carbon-based negative electrode active material, and the second negative electrode active layer includes a second carbon-based negative electrode active material and a silicon-based negative electrode active material.
The negative electrode according to the present disclosure includes a silicon-based negative electrode active material in the second negative electrode active layer to implement high energy density, and at the same time can improve rapid charging performance and lifespan characteristics of the negative electrode by controlling directionality that the first carbon-based negative electrode active material and second carbon-based negative electrode active material included in the first negative electrode active layer and the second negative electrode active layer, respectively, have with respect to a surface of the negative electrode current collector.
Specifically, as shown in FIG. 1, the first carbon-based negative electrode active material and the second carbon-based negative electrode active material may have a cross-sectional shape in which lengths of any two line segments passing through a center of a particle are different when projected as two-dimensional particles. The cross-sectional shape may have a form of an ellipsoid elongated in any one direction based on the particle center. In some cases, the first carbon-based negative electrode active material and the second carbon-based negative electrode active material may be amorphous (shapelessness) particles in which plate-shaped, sheet-shaped, flake-shaped, acicular-shaped particles, etc. are aggregated, making it difficult to define the shape. In this case, the amorphous particles do not include spherical particles.
Such first carbon-based negative electrode active material and second carbon-based negative electrode active material may be oriented such that a major axis passing through a particle center when the particles are two-dimensionally projected (hereinafter, referred to as "major axis of the carbon-based negative electrode active material") has a predetermined inclination with respect to the negative electrode current collector. The present disclosure can shorten the tortuosity of the negative electrode active layer comprising the same by controlling the inclination formed between the negative electrode current collector and the major axis of the carbon-based negative electrode active material within a predetermined range. Since the tortuosity provides a migration path of lithium ions during charging of the secondary battery, the shorter it is, the faster the charging speed of the secondary battery can be promoted.
For example, in the negative electrode according to the present disclosure, when analyzing a thickness direction cross-section of an entire negative electrode active layer comprising the first negative electrode active layer and the second negative electrode active layer by scanning electron microscopy (SEM), the major axes of the first carbon-based negative electrode active material and the second carbon-based negative electrode active material may be inclined at a predetermined inclination with respect to the negative electrode current collector. In other words, when measuring the inclination that the major axis of the carbon-based negative electrode active material included in each negative electrode active layer has with respect to the negative electrode current collector, Equation 1 below may be satisfied:

$$[\text{Equation 1}]$$

$$0.1 \leq SL_{60\text{-}120}/FL_{60\text{-}120} < 1.0$$

In the above Equation 1,

wherein $FL_{60\text{-}120}$ represents a percentage (unit: %) of the first carbon-based negative electrode active material in which an angle formed between a major axis of the first carbon-based negative electrode active material and a surface of the negative electrode current collector is greater than 60° and 120° or less among the first carbon-based negative electrode active material,

wherein $SL_{60\text{-}120}$ represents a percentage (unit: %) of the second carbon-based negative electrode active material in which an angle formed between a major axis of the second carbon-based negative electrode active material and a surface of the negative electrode current collector is greater than 60° and 120° or less among the second carbon-based negative electrode active material, and

wherein the major axis of the carbon-based negative electrode active material means a longest line segment among line segments passing through a center of the corresponding carbon-based negative electrode active material in an image photographed by scanning electron microscopy.

The above Equation 1 represents a ratio between a content ratio ($FL_{60\text{-}120}$) of the first carbon-based negative electrode active material and a content ratio ($SL_{60\text{-}120}$) of the second carbon-based negative electrode active material in which the major axis has an inclination of greater than 60° and 120° or less with respect to the negative electrode current collector among the first carbon-based negative electrode active material and the second carbon-based negative electrode active material included in each negative electrode active layer.

Specifically, the inclination formed between the major axis of the carbon-based negative electrode active material and the surface of the negative electrode current collector may be 0° to 180°. At this time, a case where the inclination of the major axis with respect to the surface of the negative electrode current collector is 0° to 90° and a case where it is 90° to 180° differ only in directionality of the major axis, and the angle formed with the surface of the negative electrode current collector may actually be the same. For example, a case having an inclination of 60° and a case having an inclination of 120° with respect to the surface of the negative electrode current collector differ only in directionality of the major axis of the carbon-based negative electrode active material with respect to the surface of the negative electrode current collector, and the angle formed between the surface of the negative electrode current collector and the major axis of the carbon-based negative electrode active material may be understood to be the same. Therefore, a ratio in which the major axis of the carbon-based negative electrode active material is greater than 60° and 120° or less with respect to the surface of the negative electrode current collector represents a content ratio of the carbon-based negative electrode active material in which the major axis has an inclination exceeding 60° with respect to the surface of the negative electrode current collector regardless of directionality. This may be understood to be the same as a content ratio of the carbon-based negative electrode active material in which an angle formed between the surface of the negative electrode current collector and the major axis of the carbon-based negative electrode active material is greater than 60° and 90° or less. Equation 1 means that a ratio of the carbon-based negative electrode active material in which an inclination formed between the major axis of the carbon-based negative electrode active material and the surface of the negative electrode current collector exceeds 60° is higher in the first negative electrode active layer than in the second negative electrode active layer. The present disclosure can lower the tortuosity inside the first negative electrode active layer adjacent to the negative electrode current collector by implementing a high ratio of the first carbon-based negative electrode active material having an inclination of greater than 60° and 120° or less between the negative electrode current collector and the major axis in the first negative electrode active layer. Accordingly, since electrolyte impregnation and/or migration of lithium ions are improved in the first negative electrode active layer, an oxidation-reduction reaction inside the negative electrode active layer adjacent to the negative electrode current collector during charge and discharge of the secondary battery can be facilitated. Therefore, uniform degradation can be induced in the entire negative electrode active layer. In addition, since volume expansion in a thickness direction of the first negative electrode active layer due to insertion of lithium ions during charging of the secondary battery is suppressed, there is an advantage that adhesion between the negative electrode active layer and the negative electrode current collector is improved. Therefore, the negative electrode has an advantage of improved lifespan characteristics.

Accordingly, the negative electrode of the present disclosure may satisfy Equation 1 as 0.1 or more and less than 1.0 (i.e., $0.1 \leq SL_{60\text{-}120}/FL_{60\text{-}120} < 1.0$). Specifically, the negative electrode may satisfy a range of 0.5 or more and less than 1.0 (i.e., $0.5 \leq SL_{60-120}/FL_{60-120} < 1.0$); 0.5 to 0.99 (i.e., $0.5 \leq SL_{60-120}/FL_{60-120} \leq 0.99$); 0.5 to 0.85 (i.e., $0.5 \leq SL_{60-120}/FL_{60-120} \leq 0.85$); 0.5 to 0.7 (i.e., $0.5 \leq SL_{60-120}/FL_{60-120} \leq 0.7$); 0.6 to 0.99 (i.e., $0.6 \leq SL_{60-120}/FL_{60-120} \leq 0.99$); 0.7 to 0.99 (i.e., $0.7 \leq SL_{60-120}/FL_{60-120} \leq 0.99$); 0.4 to 0.7 (i.e., $0.4 \leq SL_{60-120}/FL_{60-120} \leq 0.7$); 0.65 to 0.87 (i.e., $0.65 \leq SL_{60-120}/FL_{60-120} \leq 0.87$); 0.88 to 0.99 (i.e., $0.88 \leq SL_{60-120}/FL_{60-120} \leq 0.99$); or 0.55 to 0.85 (i.e., $0.55 \leq SL_{60-120}/FL_{60-120} \leq 0.85$).

In addition, the negative electrode according to the present disclosure may further satisfy any one or more of Equation 2 and Equation 3 below together with Equation 1:

$$[\text{Equation 2}]$$

$$40 \leq FL_{30-150} \leq 70$$

$$[\text{Equation 3}]$$

$$5 \leq SL_{60-120} \leq 20$$

In the above Equation 2 and Equation 3,

wherein $FL_{30-150}$ represents a percentage (unit: %) of the first carbon-based negative electrode active material in which an angle formed between a major axis of the first carbon-based negative electrode active material and a surface of the negative electrode current collector is greater than 30° and 150° or less among the first carbon-based negative electrode active material, and

wherein $SL_{60-120}$ represents a percentage (unit: %) of the second carbon-based negative electrode active material in which an angle formed between a major axis of the second carbon-based negative electrode active material and a surface of the negative electrode current collector is greater than 60° and 120° or less among the second carbon-based negative electrode active material.

The above Equation 2 is a parameter meaning that a ratio in which an inclination of the major axis with respect to the negative electrode current collector exceeds 30° is high among the first carbon-based negative electrode active material, and may satisfy a ratio in a range of 40% to 70% among the entire first carbon-based negative electrode active material. For example, the present disclosure may satisfy Equation 2 in a ratio in a range of 45% to 70% (i.e., $45\% \leq FL_{30-150} \leq 70\%$); 50% to 70% (i.e., $50\% \leq FL_{30-150} \leq 70\%$); 45% to 60% (i.e., $45\% \leq FL_{30-150} \leq 60\%$); 50% to 60% (i.e., $50\% \leq FL_{30-150} \leq 60\%$); or 51% to 57% (i.e., $51\% \leq FL_{30-}150 \leq 57\%$).

The present disclosure can significantly lower the tortuosity of the first negative electrode active layer by satisfying a ratio in which an inclination formed between the negative electrode current collector and the major axis exceeds 30° among the first carbon-based negative electrode active material in the above-described range. This has an advantage of implementing high rapid charging performance during charging of the secondary battery. In addition, when the major axis of the first carbon-based negative electrode active material has a high inclination exceeding 30° with respect to the negative electrode current collector, there is an effect of suppressing volume expansion in a thickness direction of the first negative electrode active layer during charging of the secondary battery. This has an advantage of further extending the lifespan of the negative electrode because adhesion between the negative electrode current collector and the first negative electrode active layer can be more solidified.

The above Equation 3 is a parameter meaning that a ratio in which an inclination of the major axis with respect to the negative electrode current collector is greater than 60° and 120° or more is low among the second carbon-based negative electrode active material, and may satisfy a ratio in a range of 5% to 20% among the entire second carbon-based negative electrode active material. For example, the present disclosure may satisfy Equation 3 in a ratio in a range of 10% to 20% (i.e., $10\% \leq SL_{60-120} \leq 20\%$); 5% to 15% (i.e., $5\% \leq SL_{60-120} \leq 15\%$); 6% to 11% (i.e., $6\% \leq SL_{60-120} \leq 11\%$); 8% to 18% (i.e., $8\% \leq SL_{60-120} \leq 18\%$); 6% to 13% (i.e., $6\% \leq SL_{60-120} \leq 13\%$); 11% to 14% (i.e., $11\% \leq SL_{60-120} \leq 14\%$); 14% to 19% (i.e., $14\% \leq SL_{60-120} \leq 19\%$); or 15% to 19% (i.e., $15\% \leq SL_{60-120} \leq 19\%$).

The present disclosure can implement high energy density and charge and discharge capacity of the negative electrode while preventing deterioration of rapid charging performance by satisfying a ratio in which an inclination formed between the major axis of the second carbon-based negative electrode active material and the negative electrode current collector exceeds 60° in the above-described range. Specifically, if a ratio in which an inclination formed between the major axis and the negative electrode current collector exceeds 60° among the second carbon-based negative electrode active material included in the negative electrode is lower than the above-described lower limit value, there is a problem that electrolyte wettability of the negative electrode decreases and rapid charging performance of the negative electrode deteriorates. In addition, if the ratio is higher than the above-described upper limit value, there is a limitation that energy density decreases and charge and discharge capacity of the negative electrode decreases.

The orientation of the major axis of the carbon-based negative electrode active material with respect to the surface of the negative electrode current collector is implemented by a magnetic field applied to a negative electrode slurry comprising the carbon-based negative electrode active material during manufacturing of the negative electrode. The carbon-based negative electrode active material is a diamagnetic material, and when a magnetic field is applied, exhibits magnetic anisotropy in which diamagnetism varies depending on an axial direction of crystals constituting the carbon-based negative electrode active material. On the other hand, since the silicon-based negative electrode active material included in the second negative electrode active layer does not exhibit such magnetic anisotropy, orientation behavior with respect to the negative electrode current collector appears insignificantly even if a magnetic field is applied. Due to such silicon-based negative electrode active material, since the second carbon-based negative electrode active material does not sufficiently implement magnetic anisotropy even if a magnetic field is applied, orientation with respect to the negative electrode current collector may be induced relatively lower compared to the first carbon-based negative electrode active material.

Orientation of the major axes of the first carbon-based negative electrode active material and the second carbon-based negative electrode active material may be affected by the type or content of the carbon-based negative electrode active material, average particle diameter, porosity, content ratio with the silicon-based negative electrode active material, etc. Therefore, in order to satisfy Equations 1 to 3 described above, the negative electrode according to the present disclosure may be adjusted so that the type, content, and/or physical properties of the negative electrode active materials included in the first negative electrode active layer and the second negative electrode active layer satisfy predetermined conditions.

For example, the first carbon-based negative electrode active material and the second carbon-based negative electrode active material included in each negative electrode active layer are materials having carbon atoms as a main component, and may be the same or different in type and/or content.

Specifically, the first carbon-based negative electrode active material and the second carbon-based negative electrode active material may include one or more selected from natural graphite, artificial graphite, Kish graphite, pyrolytic carbon, carbon microbeads, mesophase calcined carbon based on tar and pitch, and graphitized coke.

The first carbon-based negative electrode active material and the second carbon-based negative electrode active material each may have a form of an assembly in which a plurality of particles is assembled. In this case, one graphite assembly may be formed by aggregating 2 to 100, preferably 3 to 20 graphite particles. For example, the first carbon-based negative electrode active material may include artificial graphite. The artificial graphite may have the form of a graphite assembly in which 10 to 30 particles are aggregated. Artificial graphite has advantages of excellent high-rate charge and discharge performance and excellent lifespan characteristics compared to natural graphite.

In addition, the second carbon-based negative electrode active material may include natural graphite and artificial graphite. The artificial graphite may have the form of a graphite assembly in which 10 to 30 particles are aggregated. In addition, a mixing ratio of the natural graphite and the artificial graphite may be 5 to 50:50 to 95, or 5 to 30:70 to 95 based on weight. The carbon-based negative electrode active material includes natural graphite and artificial graphite in the mixing ratio as described above, thereby solidifying adhesion between the negative electrode current collector and the negative electrode active layer, and implementing a high degree of orientation of the major axis of the carbon-based negative electrode active material with respect to the surface of the negative electrode current collector by a magnetic field applied during manufacturing of the negative electrode.

The first carbon-based negative electrode active material and/or the second carbon-based negative electrode active material include low-swelling graphite. In the present disclosure, "low-swelling graphite" means graphite having low expansion characteristics during charging of the secondary battery. For example, when a secondary battery comprising graphite as a negative electrode active material of the negative electrode is manufactured, if expansion characteristics of the negative electrode active layer are low even after repeated charge and discharge cycles of the secondary battery, the corresponding graphite may be referred to as low-swelling graphite. Here, the expansion characteristics of the low-swelling graphite can be known through a change in thickness of the negative electrode active layer according to charge and discharge cycles. Examples of such low-swelling graphite include low-swelling natural graphite and low-swelling artificial graphite.

In the present disclosure, the low-swelling graphite may be manufactured by a cold isostatic press (CIP) method that uniformly applies pressure in each direction of particles at a low temperature. The low-swelling graphite manufactured by the cold isostatic press method is isotropic graphite, and the isotropic graphite has low electrical resistance, resistance to thermal shock, and excellent mechanical properties, thereby improving lifespan characteristics of the negative electrode itself.

In addition, the low-swelling graphite may refer to natural graphite particles coated with carbon. In this case, the low-swelling graphite has a carbon layer, so that expansion of the graphite is suppressed during charging of the secondary battery, and there is an advantage that an amount of impurities generated due to physical damage during manufacturing of the carbon-based negative electrode active material and/or manufacturing of the negative electrode or battery assembly process using the same is significantly small.

The low-swelling graphite has a characteristic of high porosity inside the graphite particles. High porosity of the graphite particles can improve volume expansion control ability of the negative electrode active material itself, so that volume expansion characteristics during charging of the secondary battery are small, and since insertion of lithium ions into the inside of the particles is advantageous, charging speed can be further improved. For example, the low-swelling graphite may satisfy a predetermined range of total pore volume. Specifically, the low-swelling graphite may have a total pore volume in a range of $1 \times 10^{-5}$ cm$^3$/g to $1 \times 10^{-1}$ cm$^3$/g. For example, the low-swelling graphite may have a total pore volume in a range of $5 \times 10^{-4}$ cm$^3$/g to $1 \times 10^{-1}$ cm$^3$/g; $1 \times 10^{-3}$ cm$^3$/g to $1 \times 10^{-1}$ cm$^3$/g; $5 \times 10^{-3}$ cm$^3$/g to $1 \times 10^{-1}$ cm$^3$/g; $1 \times 10^{-3}$ cm$^3$/g to $5 \times 10^{-2}$ cm$^3$/g; $1 \times 10^{-3}$ cm$^3$/g to $1 \times 10^{-2}$ cm$^3$/g; $5 \times 10^{-3}$ cm$^3$/g to $5 \times 10^{-2}$ cm$^3$/g; or $5 \times 10^{-3}$ cm$^3$/g to $2 \times 10^{-2}$ cm$^3$/g. The total pore volume of the low-swelling graphite may be measured through a BET measurement method using adsorption of nitrogen ($N_2$) gas. The low-swelling graphite can reduce volume expansion during charging of the secondary battery by satisfying the above-described range. In addition, since the low-swelling graphite satisfying the above-described range of total pore volume can provide a path through which lithium ions and/or electrons can move inside the particles, not only can the charging speed of the secondary battery be improved, but also an increase in electrical resistance of the negative electrode active layer according to charge and discharge cycle progression of the secondary battery can be effectively suppressed.

In addition, the low-swelling graphite may be included in the first negative electrode active layer and/or the second negative electrode active layer in a predetermined content. Specifically, the low-swelling graphite may be included in a range of 10 wt.% or more and 70 wt.% or less based on the total weight of the first carbon-based negative electrode active material or the second carbon-based negative electrode active material. For example, the low-swelling graphite may be included in a range of 10 wt.% to 30 wt.%; 20 wt.% to 40 wt.%; 15 wt.% to 45 wt.%; 10 wt.% to 50 wt.%; 30 wt.% to 60 wt.%; 50 wt.% to 70 wt.%; 40 wt.% to 60 wt.%; 15 wt.% to 25 wt.%; or 45 wt.% to 69 wt.% based on the total weight of the first carbon-based negative electrode active material or the second carbon-based negative electrode active material.

When the first carbon-based negative electrode active material includes low-swelling graphite, the present disclosure can minimize volume change of the first negative electrode active layer during charge and discharge of the secondary battery by controlling the content of low-swelling graphite in the above-described range, thereby improving adhesion between the negative electrode current collector and the first negative electrode active layer. In addition, since the low-swelling graphite controlled in the above-described content range can minimize volume change of the first negative electrode active layer during charge and discharge of the secondary battery, the negative electrode active material of the second negative electrode active layer can be firmly fixed. This reduces movement of the carbon-based negative electrode active material generated as the cycle of the secondary battery progresses, thereby preventing an increase in tortuosity of the entire negative electrode active layer, particularly the second negative electrode active layer, and/or preventing a decrease in inclination formed between the oriented carbon-based negative electrode active material and the negative electrode current collector.

When the second carbon-based negative electrode active material includes low-swelling graphite, the present disclosure can implement high charge and discharge capacity of the second negative electrode active layer adjacent to the positive electrode active layer by controlling the content of low-swelling graphite in the above-described range. In addition, volume expansion due to the silicon-based negative electrode active material included in the second negative electrode active layer during charging of the lithium secondary battery can be significantly reduced. Through this, the negative electrode can suppress an increase in tortuosity of the second negative electrode active layer until the lifespan of the secondary battery is exhausted. The tortuosity of the negative electrode active layer is a parameter indirectly indicating the length of a path provided inside the negative electrode active layer so that electrolyte or the like can move from a surface of the negative electrode active layer to the negative electrode current collector. The lower the ratio of the tortuosity, the shorter the length of the path, and the shorter the tortuosity may be the same as the shorter the migration path of lithium ions and/or electrons during charge and discharge of the secondary battery. However, in an actual lithium secondary battery, volume expansion of the negative electrode active material due to insertion of lithium ions during charging inevitably occurs, and repetitive volume change of the negative electrode active material due to charge and discharge may cause an increase in tortuosity inside the negative electrode active layer. However, the present disclosure can minimize expansion of the volume of the second negative electrode active layer by including low-swelling graphite as the second carbon-based negative electrode active material in a predetermined content in the second negative electrode active layer comprising the silicon-based negative electrode active material having large volume expansion during charging.

Meanwhile, the first carbon-based negative electrode active material and the second carbon-based negative electrode active material included in each negative electrode active layer may satisfy a predetermined range of average particle diameter. Specifically, each of the carbon-based negative electrode active materials may exhibit an average particle diameter ($D_{50}$) in a range of 0.5 $\mu$m to 20 $\mu$m. For example, the first carbon-based negative electrode active material and the second carbon-based negative electrode active material each may exhibit an average particle diameter ($D_{50}$) in a range of 0.5 $\mu$m to 15 $\mu$m; 0.5 $\mu$m to 10 $\mu$m; 5 $\mu$m to 20 $\mu$m; 10 $\mu$m to 20 $\mu$m; 12 $\mu$m to 18 $\mu$m; 2 $\mu$m to 7 $\mu$m; 0.5 $\mu$m

to 5 $\mu$m; or 11 $\mu$m to 15 $\mu$m.

The average particle diameter of the first carbon-based negative electrode active material and the second carbon-based negative electrode active material may be advantageous to make the particle diameter smaller in order to maximize disorder of expansion direction for each of the particles so as to prevent expansion of the particles due to charging of lithium ions. However, if the particle diameter of each carbon-based negative electrode active material is less than 0.5 $\mu$m, a large amount of binder may be required due to an increase in the number of particles per unit volume. On the other hand, if the maximum particle diameter exceeds 20 $\mu$m, expansion becomes severe, so that as charge and discharge are repeated, binding property between particles and binding property between particles and the current collector decreases, and cycle characteristics may be significantly reduced.

In addition, the silicon-based negative electrode active material is a material comprising silicon (Si) as a main component, and can increase charge and discharge capacity and energy density per unit volume of the negative electrode. Examples of such silicon-based negative electrode active material include silicon (Si), silicon carbide (SiC), a composite containing silicon (Si) and carbon (C), silicon monoxide (SiO), silicon dioxide ($SiO_2$), and other silicon oxides ($SiO_q$), and these may be included alone or in combination in the negative electrode active layer.

When silicon monoxide (SiO) and silicon dioxide ($SiO_2$) are uniformly mixed or composited as the silicon-based negative electrode active material and included in the negative electrode active layer, they may be represented as silicon oxide ($SiO_q$, where $0.5 \leq q \leq 2.5$).

In addition, among the silicon-based negative electrode active materials, the composite is a material comprising silicon (Si) and carbon (C) as main components, and may mean that silicon (Si), silicon carbide (SiC), silicon oxide ($SiO_q$), etc. are composited with carbon (C). For example, the composite may have a core-shell structure in which carbon (C) is coated on a particle surface comprising silicon (Si), silicon carbide (SiC), silicon oxide ($SiO_q$), etc. At this time, the carbon (C) may be deposited on the particle surface comprising silicon (Si), silicon carbide (SiC), silicon oxide ($SiO_q$), etc. through CVD, PVD, ALD, etc.; or may have a form of modifying the particle surface using plasma, UV, etc. In addition, the composite may have a form of composite particles uniformly mixed/pulverized by applying mechanical and/or physical force to a mixture of particles comprising silicon (Si), silicon carbide (SiC), silicon oxide ($SiO_q$), etc. and particles made of carbon (C). In this case, unlike an alloy in which silicon (Si) atoms and carbon (C) atoms form a physicochemical bond, the composite may mean that particles comprising silicon (Si) components and particles made of carbon (C) are uniformly combined while maintaining their original components.

In addition, the silicon-based negative electrode active material may be doped with or form an alloy with Li, Mg, Al, Ca and/or Ti, etc. At this time, one or more of the metals may be doped into or form an alloy with the silicon-based negative electrode active material. In this case, the silicon-based negative electrode active material may be doped with or alloyed with metal in a range of 1 mol% to 10 mol%, specifically 1 mol% to 5 mol% with respect to silicon atoms. When the metal is added in the form of doping or alloy, the silicon-based negative electrode active material can increase electrical conductivity and improve mechanical strength. However, since the metals have a higher atomic weight than silicon atoms, as the content ratio increases, energy density per unit weight may decrease. Therefore, the metals may be doped into or alloyed with the silicon-based negative electrode active material in the above-described content in order to lower electrical resistance without reducing energy density per unit weight of the silicon-based negative electrode active material.

The silicon-based negative electrode active material may be included in a range of 0.1 wt.% to 30 wt.% based on a weight of the entire negative electrode active layer. Specifically, the silicon-based negative electrode active material may be included in a range of 0.1 wt.% to 25 wt.%, 20 wt.% to 30 wt.%, 10 wt.% to 30 wt.%, 0.5 wt.% to 20 wt.%, 1 wt.% to 9 wt.%, 5 wt.% to 15 wt.%, 3 wt.% to 7 wt.%, 11 wt.% to 19 wt.%, 13 wt.% to 17 wt.%, 15 wt.% to 20 wt.%, 3 wt.% to 13 wt.%, or 1 wt.% to 15 wt.% based on the weight of the entire negative electrode active layer. The present disclosure can improve charge capacity per unit mass while reducing lithium consumption and irreversible capacity loss during initial charge and discharge of the secondary battery by adjusting the content ratio of the silicon-based negative electrode active material in the above range. In addition, since structural stability of the negative electrode active layer can be improved by minimizing volume change of the negative electrode active layer during charge and discharge of the secondary battery, the lifespan of the secondary battery can be increased.

The silicon-based negative electrode active material may have a predetermined average particle diameter ($D_{50}$). Specifically, the silicon-based negative electrode active material may have an average particle diameter ($D_{50}$) in a range of 1 $\mu$m to 20 $\mu$m. For example, the silicon-based negative electrode active material may have an average particle diameter ($D_{50}$) in a range of 1 $\mu$m to 15 $\mu$m; 1 $\mu$m to 10 $\mu$m; 1 $\mu$m to 9 $\mu$m; 1 $\mu$m to 7.5 $\mu$m; 1 $\mu$m to 5 $\mu$m; 2 $\mu$m to 8 $\mu$m; 3 $\mu$m to 7 $\mu$m; 5 $\mu$m to 10 $\mu$m; 5 $\mu$m to 15 $\mu$m; 10 $\mu$m to 20 $\mu$m; 11 $\mu$m to 18 $\mu$m; 6 $\mu$m to 14 $\mu$m; or 2 $\mu$m to 6 $\mu$m.

If the minimum particle diameter of the silicon-based negative electrode active material is less than the lower limit value of the above-described range, uniform dispersion in the second negative electrode active layer may be difficult. If the silicon-based negative electrode active material is non-uniformly dispersed, since oxidation-reduction reactions in regions where the silicon-based negative electrode active material is aggregated and regions where it is not aggregated are non-uniformly induced as charge and discharge of the secondary battery proceed, degradation of the second negative electrode active layer may be promoted. In addition, if the maximum particle diameter of the silicon-based negative electrode active material exceeds the upper limit value of the above-described range, it is difficult to control crystal planes of the silicon-based negative electrode active material, and since an expansion rate per unit area of the second negative electrode active layer significantly increases during charge and discharge of the secondary battery, there is a problem that cycle characteristics are significantly reduced as charge and discharge are repeated.

Furthermore, the first negative electrode active layer and the second negative electrode active layer may optionally further include a conductive material, a binder, other additives, etc. along with the negative electrode active material as a main component as needed.

The conductive material may include one or more selected from carbon blacks such as acetylene black, furnace black, lamp black, and thermal black; graphene; carbon nanotubes and carbon fibers, but is not limited thereto.

For example, the negative electrode active layer may contain carbon black, carbon nanotubes, carbon fibers, etc. alone or in combination as a conductive material.

The content of the conductive material may be in a range of 0.1 wt.% to 10 wt.% based on the weight of each negative electrode active layer. Specifically, the conductive material may be in a range of 0.1 wt.% to 8 wt.%, 0.1 wt.% to 5 wt.%, 0.1 wt.% to 3 wt.%, 2 wt.% to 6 wt.%, or 0.5 wt.% to 2 wt.% based on the weight of each negative electrode active layer. The present disclosure can prevent charge capacity from decreasing due to increased resistance of the negative electrode due to a low content of the conductive material by controlling the content of the conductive material in the above range. In addition, the present disclosure can prevent a problem that charge capacity decreases due to a decrease in content of the negative electrode active material due to an excessive amount of conductive material exceeding the above range, or that electrical resistance increases due to an increase in loading amount of the negative electrode active layer.

The binder is a component that assists in binding the negative electrode active material and the conductive material and binding to the current collector, and may be appropriately applied within a range that does not reduce electrical properties of the negative electrode. For example, the binder may include one or more selected from vinylidene fluoride-hexafluoropropylene copolymer (PVDF-co-HFP), polyvinylidene fluoride (PVdF), polyacrylonitrile, polymethyl methacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluoro rubber.

The content of the binder may be in a range of 0.1 wt.% to 10 wt.% based othe weightht of each negative electrode active layer. Specifically, the binder may be in a range of 0.1 wt.% to 8 wt.%, 0.1 wt.% to 5 wt.%, 0.1 wt.% to 3 wt.%, or 2 wt.% to 6 wt.% based on the weight of each negative electrode active layer. The present disclosure can prevent adhesion of the active layer from decreasing due to a low content of binder or electrical properties of the negative electrode from decreasing due to an excessive amount of binder by controlling the content of binder contained in each negative electrode active layer in the above range.

The negative electrode active layer may have a predetermined average thickness in order to implement high charge and discharge capacity while implementing fast charging speed. As the loading amount of the negative electrode active material exhibiting electrochemical activity increases, the charge and discharge capacity of the negative electrode active layer increases. However, in this case, since it is difficult to orient the major axis of the carbon-based negative electrode active material to have a predetermined inclination with respect to the negative electrode current collector in the manufacturing process of the negative electrode active layer, there is a limitation that rapid charging performance of the manufactured negative electrode is low. Therefore, the present disclosure can adjust the average thickness of the negative electrode active layer to a predetermined range. Specifically, the negative electrode active layer may have an average thickness in a range of 50 $\mu$m to 400 $\mu$m. For example, the negative electrode active layer may have an average thickness in a range of 100 $\mu$m to 350 $\mu$m; 100 $\mu$m to 300 $\mu$m; 100 $\mu$m to 250 $\mu$m; 100 $\mu$m to 200 $\mu$m; 150 $\mu$m to 400 $\mu$m; 200 $\mu$m to 400 $\mu$m; 150 $\mu$m to 300 $\mu$m; 150 $\mu$m to 250 $\mu$m; 50 $\mu$m to 150 $\mu$m; 80 $\mu$m to 190 $\mu$m; 80 $\mu$m to 210 $\mu$m; or 150 $\mu$m to 220 $\mu$m.

In addition, the first negative electrode active layer and the second negative electrode active layer may have a predetermined thickness ratio. Specifically, the second negative electrode active layer may have a thickness ratio in a range of 80% to 150% based on an average thickness of the first negative electrode active layer. For example, the second negative electrode active layer may have a thickness ratio in a range of 80% to 120%; 80% to 100%; 80% to 99%; 100% to 150%; 125% to 150%; 90% to 120%; 110% to 140%; or 95% to 105% based on the average thickness of the first negative electrode active layer.

The present disclosure can prevent charge and discharge capacity and cycle characteristics of the negative electrode from being reduced due to an average thickness ratio of the second negative electrode active layer lower than the lower limit value of the above-described range by adjusting the thickness ratio of the first negative electrode active layer and the second negative electrode active layer in the above-described range. In addition, it is possible to prevent charge and discharge capacity and rapid charging performance of the negative electrode from decreasing due to an average thickness ratio of the second negative electrode active layer higher than the upper limit value of the above-described range.

The negative electrode current collector is not particularly limited as long as it has high conductivity without causing chemical changes in the battery. For example, a thin plate or film comprising copper, stainless steel, nickel, titanium, calcined carbon, etc. may be used as the negative electrode current collector, and when comprising copper or stainless steel, a surface-treated one with carbon, nickel, titanium, silver, etc. may also be used. In addition, an average thickness of the negative electrode current collector may be appropriately applied in a range of 1 $\mu$m to 500 $\mu$m in consideration of conductivity and total thickness of the manufactured negative electrode.

The negative electrode according to the present disclosure has excellent charge and discharge capacity and high energy density by having the above-described configuration. In addition, since the migration path of lithium ions in the negative electrode active layer is shortened and the diffusion resistance of lithium ions is significantly low, the negative electrode has an advantage of excellent rapid charging performance.

## Lithium Secondary Battery

In addition, the present disclosure provides a lithium secondary battery comprising an electrode assembly including a positive electrode, the negative electrode of the present disclosure described above, and a separator disposed between the positive electrode and the negative electrode.

The lithium secondary battery according to the present disclosure includes an electrode assembly having a structure in which a plurality of positive electrodes and a plurality of negative electrodes are alternately arranged, and a separator is positioned between them. The lithium secondary battery includes the negative electrode of the present disclosure described above, thereby not only having excellent rapid charging performance due to improved lithium-ion diffusion capability, but also having an advantage of high energy density.

At this time, since the negative electrode has the same configuration as the above-described configuration, a detailed description thereof will be omitted.

In addition, the positive electrode includes a positive electrode active layer comprising a positive electrode active material on a positive electrode current collector, and the positive electrode active layer may optionally further include a conductive material, a binder, other additives, etc. as needed.

The positive electrode active material is a material capable of causing an electrochemical reaction on the positive electrode current collector, and may include one or more lithium metal oxides represented by Chemical Formula 1 and Chemical Formula 2 below, which are capable of reversible intercalation and deintercalation of lithium ions:

$$[\text{Chemical Formula 1}] \qquad Li_1[Ni_mCo_nMn_wM^1{}_v]O_2$$

$$[\text{Chemical Formula 2}] \qquad LiM^2{}_pMn_qP_rO_4$$

In the above Chemical Formula 1 and Chemical Formula 2,

wherein $M^1$ is one or more elements selected from W, Cu, Fe, V, Cr, Ti, Zr, Zn, Al, In, Ta, Y, La, Sr, Ga, Sc, Gd, Sm, Ca, Ce, Nb, Mg, B, and Mo,
wherein 1, m, n, w, and v are $1.0 \leq 1 \leq 1.30$, $0.5 \leq m < 1$, $0 < n \leq 0.3$, $0 < w \leq 0.3$, and $0 \leq v \leq 0.1$, respectively, and $m+n+w+v=1$,
wherein $M^2$ is Ni, Co, or Fe,
wherein p is $0.05 \leq p \leq 1.0$,
wherein q is 2-p, and
wherein r is 0 or 1.

The lithium metal oxides represented by the above Chemical Formula 1 and Chemical Formula 2 are materials containing nickel (Ni) and manganese (Mn) in high content, respectively, and when used as a positive electrode active material, there is an advantage of stably supplying electricity of high capacity and/or high voltage compared to positive electrode active materials such as lithium iron phosphate oxide ($LiFeO_4$) conventionally used.

At this time, the lithium metal oxide represented by Chemical Formula 1 may include $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, etc. The lithium metal oxide represented by Chemical Formula 2 may include $LiNi_{0.7}Mn_{1.3}O_4$; $LiNi_{0.5}Mn_{1.5}O_4$; $LiNi_{0.3}Mn_{1.7}O_4$; etc., and these may be used alone or in combination.

In addition, the positive electrode active material may be included in an amount of 85 wt.% or more based on the total weight of the positive electrode active layer. Specifically, the positive electrode active material may be included in an amount of 90 wt.% or more, 93 wt.% or more, or 95 wt.% or more based on the total weight of the positive electrode active layer.

The positive electrode active layer may further include a conductive material, a binder, other additives, etc. together with the positive electrode active material.

At this time, the conductive material is used to improve electrical performance of the positive electrode, and those conventionally used in the art may be applied. Specifically, the conductive material may include one or more selected from natural graphite; artificial graphite; carbon blacks such as acetylene black, furnace black, lamp black, and thermal black; graphene; and carbon nanotubes.

The conductive material may be included in an amount of 0.1 wt.% to 5 wt.% based on the total weight of the positive electrode active layer. Specifically, the conductive material may be included in an amount of 0.1 wt.% to 4 wt.%; 2 wt.% to 4 wt.%; 1.5 wt.% to 5 wt.%; 1 wt.% to 3 wt.%; 0.1 wt.% to 2 wt.%; or 0.1 wt.% to 1 wt.% based on the total weight of the positive electrode active layer.

In addition, the binder performs a role of binding the positive electrode active material, the positive electrode additive, and the conductive material to each other, and may be used without particular limitation as long as it has such a function. Specifically, the binder may include one or more resins selected from polyvinylidene fluoride-hexafluoropropylene copolymer (PVdF-co-HFP), polyvinylidene fluoride (PVdF), polyacrylonitrile, polymethyl methacrylate, and copolymers thereof. For example, the binder may include polyvinylidene fluoride.

The binder may be included in an amount of 1 wt.% to 10 wt.% based on the total weight of the positive electrode active layer. Specifically, the binder may be included in an amount of 2 wt.% to 8 wt.%; or 1 wt.% to 5 wt.% based on the total weight of the positive electrode active layer.

A total thickness of the positive electrode active layer is not particularly limited, but specifically may be in a range of 50 $\mu$m to 300 $\mu$m, and more specifically may be in a range of 100 $\mu$m to 200 $\mu$m; 80 $\mu$m to 150 $\mu$m; 120 $\mu$m to 170 $\mu$m; 150 $\mu$m to 300 $\mu$m; 200 $\mu$m to 300 $\mu$m; or 150 $\mu$m to 190 $\mu$m.

In addition, as the positive electrode current collector, those having high conductivity without causing chemical changes in the battery may be used. For example, a thin plate or film comprising stainless steel, aluminum, nickel, titanium, calcined carbon, etc. may be used as the positive electrode current collector, and when comprising aluminum or stainless steel, surface-treated with carbon, nickel, titanium, silver, etc. may be used. In addition, an average thickness of the current collector may be appropriately applied in a range of 3 $\mu$m to 500 $\mu$m in consideration of conductivity and total thickness of the manufactured positive electrode.

The separator interposed between the positive electrode and the negative electrode of the lithium secondary battery is an insulating thin film having high ion permeability and mechanical strength, and is not particularly limited as long as it is conventionally used in the art. Specifically, the separator may use one comprising one or more polymers selected from polypropylene having chemical resistance and hydrophobicity; polyethylene; and polyethylene-propylene copolymer. The separator may have a form of a porous polymer substrate such as a sheet or nonwoven fabric comprising the above-described polymer, and in some cases, may have a form of a composite separator in which organic or inorganic particles are coated on the porous polymer substrate by an organic binder. In addition, the separator may have an average diameter of pores of 0.01 $\mu$m to 10 $\mu$m and an average thickness of 5 $\mu$m to 300 $\mu$m.

Meanwhile, the lithium secondary battery according to the present disclosure is not particularly limited, but may be a secondary battery in a form that may include a stack-type; zigzag-type; or zigzag-stack-type electrode assembly. For example, the lithium secondary battery according to the present disclosure may be a pouch-type secondary battery or a prismatic secondary battery.

The pouch-type secondary battery and/or the prismatic secondary battery have an advantage of high utilization in terms of energy density because unit cells of the secondary battery can be packed at high density in a limited space.

**Method** of Manufacturing **Negative Electrode**

Furthermore, the present disclosure provides a method of manufacturing the negative electrode according to the present disclosure described above.

Specifically, the method of manufacturing a negative electrode according to the present disclosure includes coating a first negative electrode slurry comprising a first carbon-based negative electrode active material on at least one surface of a negative electrode current collector (S1), coating a second negative electrode slurry comprising a second carbon-based negative electrode active material and a silicon-based negative electrode active material on the coated first negative electrode slurry (S2), and applying a magnetic field to the coated first negative electrode slurry and second negative electrode slurry (S3).

The above steps (S1) and (S2) refer to a process of simultaneously or sequentially discharging and coating a first negative electrode slurry comprising a first carbon-based negative electrode active material and a second negative electrode slurry comprising a second carbon-based negative electrode active material on a surface of a moving negative electrode current collector. The first negative electrode slurry is coated on at least one surface of the negative electrode current collector, and the second negative electrode slurry is coated on the coated first negative electrode slurry.

The above steps (S1) and (S2) may be applied without particular limitation as long as it is a method conventionally applied in the art, but preferably a die coating method may be used. The die coating method is performed using a slot die coater, and the slot die coater may include a shim for controlling discharge conditions of the negative electrode slurry. The slot die coater can easily control a loading amount, a coating thickness, etc. of the negative electrode slurry coated on the negative electrode current collector by controlling the shape or position of the shim.

For example, the present disclosure may simultaneously coat the first negative electrode slurry and the second negative electrode slurry on the negative electrode current collector using a dual die coater. In this case, there is an advantage of significantly increasing process efficiency compared to sequentially coating each slurry.

In addition, the first negative electrode slurry and the second negative electrode slurry include a first carbon-based negative electrode active material and a second carbon-based negative electrode active material as main components, respectively. Specifically, the first carbon-based negative electrode active material and the second carbon-based negative electrode active material may include one or more selected from natural graphite, artificial graphite, Kish graphite, pyrolytic carbon, carbon microbeads, mesophase calcined carbon based on tar and pitch, and graphitized coke.

The first carbon-based negative electrode active material and the second carbon-based negative electrode active material each may have a form of an assembly in which a plurality of particles is assembled. In this case, one graphite assembly may be formed by aggregating 2 to 100, preferably 3 to 20 graphite particles. For example, the first carbon-based negative electrode active material may include artificial graphite, and the artificial graphite may have a form of a graphite assembly in which 10 to 30 particles are aggregated. Artificial graphite has advantages of excellent high-rate charge and discharge performance and excellent lifespan characteristics compared to natural graphite.

In addition, the second carbon-based negative electrode active material may include natural graphite and artificial graphite. The artificial graphite may have the form of a graphite assembly in which 10 to 30 particles are aggregated. In addition, a mixing ratio of the natural graphite and the artificial graphite may be 5 to 50:50 to 95, or 5 to 30:70 to 95 based on weight. The second carbon-based negative electrode active material includes natural graphite and artificial graphite in the mixing ratio as described above, thereby solidifying adhesion between the negative electrode current collector and the negative electrode active layer, and implementing a high degree of orientation of the major axis of the carbon-based negative electrode active material with respect to the surface of the negative electrode current collector by a magnetic field applied during manufacturing of the negative electrode.

The first carbon-based negative electrode active material and/or the second carbon-based negative electrode active material include low-swelling graphite. The carbon-based negative electrode active material includes low-swelling graphite. In the present disclosure, "low-swelling graphite" means graphite having low expansion characteristics during charging of the secondary battery. Here, the expansion characteristics of the low-swelling graphite can be known through a change in thickness of the negative electrode active layer according to charge and discharge cycles. Examples of such low-swelling graphite include low-swelling natural graphite and low-swelling artificial graphite.

In the present disclosure, the low-swelling graphite may refer to natural graphite particles coated with carbon. The low-swelling graphite may be manufactured by spheroidizing plate-like natural graphite and then using a cold isostatic press (CIP) method that uniformly applies pressure in each direction of particles at a low temperature. The low-swelling natural graphite manufactured by the cold isostatic press method may be isotropic graphite. The isotropic graphite has low electrical resistance, resistance to thermal shock, and excellent mechanical properties, thereby improving lifespan characteristics of the negative electrode itself.

The low-swelling graphite has a carbon layer, so that expansion of the graphite is suppressed during charging of the secondary battery, and there is an advantage that an amount of impurities generated due to physical damage during manufacturing of the carbon-based negative electrode active material and/or manufacturing of the negative electrode or battery assembly process using the same is significantly small.

In addition, the low-swelling graphite has a characteristic of high porosity inside the graphite particles. The graphite particles with high porosity have excellent volume expansion control ability of the negative electrode active material itself, and since they are advantageous for insertion of lithium ions, there is an advantage of excellent rapid charging performance. The low-swelling graphite may satisfy a predetermined range of total pore volume. Specifically, the low-swelling graphite may have a total pore volume in a range of $1 \times 10^{-5}$ cm$^3$/g to $1 \times 10^{-1}$ cm$^3$/g. For example, the low-swelling graphite may have a total pore volume in a range of $5 \times 10^{-4}$ cm$^3$/g to $1 \times 10^{-1}$ cm$^3$/g; $1 \times 10^{-3}$ cm$^3$/g to $1 \times 10^{-1}$ cm$^3$/g; $5 \times 10^{-3}$ cm$^3$/g to $1 \times 10^{-1}$ cm$^3$/g; $1 \times 10^{-3}$ cm$^3$/g to $5 \times 10^{-2}$ cm$^3$/g; $1 \times 10^{-3}$ cm$^3$/g to $1 \times 10^{-2}$ cm$^3$/g; $5 \times 10^{-3}$ cm$^3$/g to $5 \times 10^{-2}$ cm$^3$/g; or $5 \times 10^{-3}$ cm$^3$/g to $2 \times 10^{-2}$ cm$^3$/g. The total pore volume of the low-swelling graphite may be measured through a BET measurement method using adsorption of nitrogen (N$_2$) gas. The low-swelling graphite can reduce volume expansion during charging of the secondary battery by satisfying the above-described range. In addition, since the low-swelling graphite satisfying the above-described range of total pore volume can provide a path through which lithium ions and/or electrons can move inside the particles, not only can the charging speed of the secondary battery be improved, but also an increase in electrical resistance of the negative electrode active layer according to charge and discharge cycle progression of the secondary battery can be effectively suppressed.

Furthermore, the second negative electrode slurry includes a silicon-based negative electrode active material. The silicon-based negative electrode active material is a material comprising silicon (Si) as a main component, and can increase charge and discharge capacity and energy density per unit volume of the negative electrode. Examples of such silicon-based negative electrode active materials include silicon (Si), silicon carbide (SiC), a composite containing silicon (Si) and carbon (C), silicon monoxide (SiO), silicon dioxide (SiO$_2$), and other silicon oxides (SiO$_q$), and these may be included alone or in combination in the negative electrode active layer.

When silicon monoxide (SiO) and silicon dioxide (SiO$_2$) are uniformly mixed or composited as the silicon-based negative electrode active material and included in the negative electrode active layer, they may be represented as silicon oxide (SiO$_q$, where $0.5 \leq q \leq 2.5$).

Among the silicon-based negative electrode active materials, the composite is a material comprising silicon (Si) and carbon (C) as main components, and may mean that silicon (Si), silicon carbide (SiC), silicon oxide (SiO$_q$), etc. are composited with carbon (C). For example, the composite may have a core-shell structure in which carbon (C) is coated on a particle surface comprising silicon (Si), silicon carbide (SiC), silicon oxide (SiO$_q$), etc. At this time, the carbon (C) may be deposited on the particle surface comprising silicon (Si), silicon carbide (SiC), silicon oxide (SiO$_q$), etc. through CVD, PVD, ALD, etc.; or may have a form of modifying the particle surface using plasma, UV, etc. In addition, the composite may have a form of composite particles uniformly mixed/pulverized by applying mechanical and/or physical force to a mixture of particles comprising silicon (Si), silicon carbide (SiC), silicon oxide (SiO$_q$), etc. and particles made of carbon (C). In this case, unlike an alloy in which silicon (Si) atoms and carbon (C) atoms form a physicochemical bond, the composite may mean that particles comprising silicon (Si) components and particles made of carbon (C) are uniformly combined while maintaining their original components.

In addition, the silicon-based negative electrode active material may be doped with or form an alloy with Li, Mg, Al, Ca and/or Ti, etc. At this time, one or more of the metals may be doped into or form an alloy with the silicon-based negative electrode active material. In this case, the silicon-based negative electrode active material may be doped with or alloyed with metal in a range of 1 mol% to 10 mol%, specifically 1 mol% to 5 mol% with respect to silicon atoms. When the metal is added in the form of doping or alloy, the silicon-based negative electrode active material can increase electrical conductivity and improve mechanical strength. However, since the metals have a higher atomic weight than silicon atoms, as the content ratio increases, energy density per unit weight may decrease. Therefore, the metals may be doped into or alloyed with the silicon-based negative electrode active material in the above-described content in order to lower electrical resistance without reducing energy density per unit weight of the silicon-based negative electrode active material.

The silicon-based negative electrode active material may be included in a range of 0.1 wt.% to 30 wt.% based on a solid content weight of the entire negative electrode slurry. Specifically, the silicon-based negative electrode active material may be included in a range of 0.1 wt.% to 25 wt.%, 20 wt.% to 30 wt.%, 10 wt.% to 30 wt.%, 0.5 wt.% to 20 wt.%, 1 wt.% to 9 wt.%, 5 wt.% to 15 wt.%, 3 wt.% to 7 wt.%, 11 wt.% to 19 wt.%, 13 wt.% to 17 wt.%, 15 wt.% to 20 wt.%, 3 wt.% to 13 wt.%, or 1 wt.% to 15 wt.% based on the solid content weight of the entire negative electrode slurry. The present disclosure can improve charge capacity per unit mass while reducing lithium consumption and irreversible capacity loss during initial charge and discharge of the secondary battery by adjusting the content ratio of the silicon-based negative electrode active material in the above range. In addition, since structural stability of the negative electrode active layer can be improved by minimizing volume change of the negative electrode active layer during charge and discharge of the secondary battery, the lifespan of the secondary battery can be increased.

The first negative electrode slurry and the second negative electrode slurry may further include a conductive material, a binder, additives, etc. in addition to the negative electrode active material. Since each component included in the negative electrode slurry is the same as the negative electrode active layer of the negative electrode for a lithium secondary battery described above, a detailed description thereof will be omitted.

Meanwhile, the orientation of the carbon-based negative electrode active material may be induced by application of a magnetic field performed after steps (S1 and S2).

Specifically, the above step (S3) means a process of applying a magnetic field to the first negative electrode slurry and the second negative electrode slurry coated on the negative electrode current collector to align and/or orient the major axes of the carbon-based negative electrode active material particles included in each negative electrode slurry with respect to the negative electrode current collector.

The degree to which the major axes of the carbon-based negative electrode active material are aligned and/or oriented may vary depending on the strength of the applied magnetic field. Therefore, in the step (S3), the magnetic field may have a strength in a range of 1,000 G to 12,000 G (Gauss) in order to enhance the effect of aligning and/or orienting the major axes of the carbon-based negative electrode active material particles with respect to the surface of the negative electrode current collector. Specifically, the magnetic field may be applied at a strength in a range of 1,500 G to 10,000 G; 2,000 G to 10,000 G; 3,000 G to 10,000 G; 1,000 G to 9,000 G; 3,000 G to 9,000 G; 7,000 G to 9,000 G; 2,000 G to 8,000 G; 3,000 G to 8,000 G; 4,000 G to 8,000 G; 5,000 G to 7,000 G; 5,000 G to 10,000 G; 5,000 G to 12,000 G; 5,000 G to 9,000 G; 5,000 G to 7,500 G; 6,000 G to 6,500 G; 6,000 G to 9,000 G; 6,000 G to 11,000 G; 9,000 G to 12,000 G; 10,000 G to 12,000 G; or 10,000 G to 11,000 G.

The carbon-based negative electrode active material in the negative electrode slurry to which the magnetic field has been applied may be oriented such that the major axis has a predetermined inclination with respect to the surface of the negative electrode current collector. This can be directly or indirectly confirmed through scanning electron microscopy (SEM) analysis, etc. of a thickness direction cross-section of the negative electrode active layer generated after drying the negative electrode slurry comprising the carbon-based negative electrode active material.

For example, in the negative electrode manufactured according to the present disclosure, when analyzing a thickness direction cross-section of an entire negative electrode active layer comprising the first negative electrode active layer and the second negative electrode active layer by scanning electron microscopy (SEM), the major axes of the first carbon-based negative electrode active material and the second carbon-based negative electrode active material included in the first negative electrode active layer and the second negative electrode active layer, respectively, may be inclined at a predetermined inclination with respect to the negative electrode current collector. In other words, when measuring the inclination that the major axis of the carbon-based negative electrode active material included in each negative electrode active layer has with respect to the negative electrode current collector, Equation 1 below may be satisfied:

$$[\text{Equation 1}]$$

$$0.1 \leq SL_{60\text{-}120}/FL_{60\text{-}120} < 1.0$$

In the above Equation 1,

wherein $FL_{60\text{-}120}$ represents a percentage (unit: %) of the first carbon-based negative electrode active material in which an angle formed between a major axis of the first carbon-based negative electrode active material and a surface of the negative electrode current collector is greater than 60° and 120° or less among the first carbon-based negative electrode active material,

wherein $SL_{60\text{-}120}$ represents a percentage (unit: %) of the second carbon-based negative electrode active material in which an angle formed between a major axis of the second carbon-based negative electrode active material and a surface of the negative electrode current collector is greater than 60° and 120° or less among the second carbon-based negative electrode active material, and

wherein the major axis of the carbon-based negative electrode active material means a longest line segment among line segments passing through a center of the corresponding carbon-based negative electrode active material in an image photographed by scanning electron microscopy.

Meanwhile, the method of manufacturing a negative electrode according to the present disclosure may further include a step (S4) of drying the negative electrode slurry to which the magnetic field has been applied after step (S3) to form a negative electrode active layer.

The drying may be applied without particular limitation as long as it is a method conventionally applicable in the art. For example, the drying may dry the negative electrode slurry by applying thermal energy to the negative electrode slurry using a hot air dryer, vacuum oven, etc.

For example, the drying may be performed at a temperature of 100°C to 250°C (specifically 160°C to 200°C) for 1 hour to 15 hours.

In addition, the method may further include a step (S5) of rolling the negative electrode active layer formed by drying after step (S4). The rolling refers to a process of increasing density of the entire negative electrode active layer by applying pressure to the surface of the formed negative electrode active layer using a roll press, etc.

The rolling may be performed under linear pressure conditions required to reach a target thickness and target porosity using rolling equipment such as a roll-press, and then vacuum dried to manufacture a negative electrode having a final negative electrode active material layer formed on the current collector.

For example, the rolling may be performed under conditions where the target thickness (i.e., average thickness of the negative electrode active layer) is 100 μm to 400 μm and the target porosity (i.e., porosity after rolling) is 21% to 30%.

Specifically, the rolling may be performed at a temperature in a range of 20°C to 100°C, more specifically 20°C to 80°C; 20°C to 60°C; 20°C to 40°C; 20°C to 30°C; 30°C to 100°C; 40°C to 100°C; 60°C to 100°C; 75°C to 100°C; 85°C to 100°C; 50°C to 90°C; 60°C to 80°C; or 65°C to 90°C.

The rolling may be performed at a rolling speed in a range of 2 m/s to 7 m/s, and more specifically may be performed at a rolling speed in a range of 2 m/s to 6.5 m/s; 2 m/s to 6 m/s; 2 m/s to 5.5 m/s; 2 m/s to 5 m/s; 2 m/s to 4.5 m/s; 2 m/s to 4 m/s; 2.5 m/s to 4 m/s; 2.5 m/s to 3.5 m/s; 3.5 m/s to 5 m/s; 5 m/s to 7 m/s; 5.5 m/s to 6.5 m/s; or 6 m/s to 7 m/s.

The rolling may be performed under pressure conditions in a range of 50 MPa to 200 MPa, and specifically may be performed under pressure conditions in a range of 50 MPa to 150 MPa; 50 MPa to 100 MPa; 100 MPa to 200 MPa; 150 MPa to 200 MPa; or 80 MPa to 140 MPa.

The present disclosure can maximize energy density of the negative electrode active layer while minimizing reduction of the inclination that the major axis of each carbon-based negative electrode active material has with the negative electrode current collector by performing rolling under the above temperature, speed, and/or pressure conditions.

The method of manufacturing a negative electrode according to the present disclosure can manufacture a negative electrode not only having high energy density but also excellent rapid charging performance by having the above-described configuration.

Hereinafter, the present disclosure will be described in more detail by Examples and Comparative Examples.

However, the following Examples and Comparative Examples are merely illustrative of the present disclosure, and the content of the present disclosure is not limited to the following Examples and Comparative Examples.

**Examples 1 to 7 and Comparative Examples 1 to 2. Manufacturing of Negative Electrode**

Natural graphite (average particle diameter ($D_{50}$): approximately 11 $\mu$m to 13 $\mu$m), artificial graphite (average particle diameter ($D_{50}$): approximately 15 $\mu$m to 16 $\mu$m), and low-swelling natural graphite (average particle diameter ($D_{50}$): approximately 16 $\mu$m to 20 $\mu$m, total pore volume: approximately 0.006 cm$^3$/g to 0.012 cm$^3$/g) were prepared as carbon-based negative electrode active materials.

In addition, silicon monoxide (SiO, average particle diameter ($D_{50}$): approximately 18$\pm$0.5 $\mu$m) as a silicon-based negative electrode active material; styrene butadiene rubber (SBR) as a binder; and carboxymethyl cellulose (CMC) as a thickener were prepared, and carbon nanotubes (CNT) and carbon black (Super-P) were prepared as conductive materials.

Then, 95 wt.% of the first carbon-based negative electrode active material, 1 wt.% of carbon black, 3.0 wt.% of styrene butadiene rubber (SBR), and 1 wt.% of carboxymethyl cellulose (CMC) were mixed with water to obtain 50% solid content to prepare a first negative electrode slurry.

Separately, 95.55 wt.% of the prepared second carbon-based negative electrode active material and silicon-based negative electrode active material, 1.13 wt.% of carboxymethyl cellulose (CMC), 2.3 wt.% of styrene butadiene rubber (SBR), 0.02 wt.% of carbon nanotubes, and 1 wt.% of carbon black were mixed with water to obtain 50% solid content to prepare a second negative electrode slurry.

At this time, ① the composition of the first carbon-based negative electrode active material, ② the composition of the second carbon-based negative electrode active material, and ③ the content ratio of the silicon-based negative electrode active material included in the second negative electrode slurry were adjusted as shown in Table 1 below.

The prepared first negative electrode slurry and second negative electrode slurry were simultaneously coated (S1 and S2) on a copper thin plate (thickness: 6 $\mu$m) being roll-to-roll transported (transport speed: 6 m/min) using a dual die coater. Thereafter, a magnetic field was applied (S3) for 2 to 11 seconds from the top and bottom of the copper thin plate being transported using a magnet. ④ Whether or not the magnetic field was applied and ⑤ the strength of the applied magnetic field was adjusted as shown in Table 2 below.

The negative electrode slurry to which the magnetic field had been applied was hot air dried in a range of approximately 180$\pm$10°C to form the first negative electrode active layer and the second negative electrode active layer on the negative electrode current collector (S4). A negative electrode (average thickness: approximately 135$\pm$5 $\mu$m) was manufactured (S5) by rolling with a roll press so that the porosity of the entire negative electrode active layer became 25 $\pm$2%.

Argon ion milling (Ar$^+$ ion milling) was performed under an acceleration voltage condition of 6 kV on a thickness direction cross-section of each manufactured negative electrode, and scanning electron microscopy (SEM) analysis of the ion-milled cross-section was performed under conditions of an acceleration voltage of 5 kV and a working distance of 7 mm. At this time, the ion milling was performed with IM5000 from Hitachi, and the scanning electron microscopy analysis was performed with IT800SHL from JEOL.

In the analyzed scanning electron microscopy images, the total number of particles of the first carbon-based negative electrode active material and the second carbon-based negative electrode active material included in each negative electrode active layer was counted. Then, the longest line segment passing through the center of each particle was set as the major axis, and the inclination formed between the major axis and the negative electrode current collector was measured. After classifying the inclination formed between the negative electrode current collector and the major axis of each carbon-based negative electrode active material into 6 groups as follows, the carbon-based negative electrode active material was classified into one of the following 6 groups according to the measured inclination:

- Group 1: inclination of the major axis of the carbon-based negative electrode active material with respect to the negative electrode current collector is greater than 0° and 30° or less,
- Group 2: inclination of the major axis of the carbon-based negative electrode active material with respect to the negative electrode current collector is greater than 30° and 60° or less,
- Group 3: inclination of the major axis of the carbon-based negative electrode active material with respect to the negative electrode current collector is greater than 60° and 90° or less,
- Group 4: inclination of the major axis of the carbon-based negative electrode active material with respect to the negative electrode current collector is greater than 90° and 120° or less,
- Group 5: inclination of the major axis of the carbon-based negative electrode active material with respect to the negative electrode current collector is greater than 120° and 150° or less,
- Group 6: inclination of the major axis of the carbon-based negative electrode active material with respect to the negative electrode current collector is greater than 150° and 180° or less.

The number of carbon-based negative electrode active materials classified into each group was counted to calculate a ratio of the carbon-based negative electrode active material of the corresponding group among the entire carbon-based negative electrode active material. Using the calculated values, values of Equations 1 to 3 below were calculated, and the results are shown in Tables 3 and 4 below:

$$[\text{Equation 1}]$$

$$0.1 \leq SL_{60\text{-}120}/FL_{60\text{-}120} < 1.0$$

$$[\text{Equation 2}]$$

$$40 \leq FL_{30\text{-}150} \leq 70$$

$$[\text{Equation 3}]$$

$$5 \leq SL_{60\text{-}120} \leq 20$$

In the above Equation 1 to Equation 3,
wherein $FL_{60\text{-}120}$ represents a percentage (unit: %) of the first carbon-based negative electrode active material in which an angle formed between a major axis of the first carbon-based negative electrode active material and a surface of the negative electrode current collector is greater than 60° and 120° or less among the first carbon-based negative electrode active material,
wherein $SL_{60\text{-}120}$ represents a percentage (unit: %) of the second carbon-based negative electrode active material in which an angle formed between a major axis of the second carbon-based negative electrode active material and a surface of the negative electrode current collector is greater than 60° and 120° or less among the second carbon-based negative electrode active material, and
wherein $FL_{30\text{-}150}$ represents a percentage (unit: %) of the first carbon-based negative electrode active material in which an angle formed between a major axis of the first carbon-based negative electrode active material and a surface of the negative electrode current collector is greater than 30° and 150° or less among the first carbon-based negative electrode active material.

[Table 1]

| | | First carbon-based negative electrode active material composition | Second carbon-based negative electrode active material composition | Silicon-based negative electrode active material content |
|---|---|---|---|---|
| | Example 1 | Artificial graphite: Low-swelling natural graphite = 1:2 (wt.%/wt.%) | Artificial graphite = 100 wt.% | 12 wt.% |
| | Example 2 | Artificial graphite: Low-swelling natural graphite = 1:1 (wt.%/wt.%) | Artificial graphite = 100 wt.% | 12 wt.% |
| | Example 3 | Artificial graphite: Low-swelling natural graphite = 2:1 (wt.%/wt.%) | Artificial graphite = 100 wt.% | 12 wt.% |

(continued)

|  | First carbon-based negative electrode active material composition | Second carbon-based negative electrode active material composition | Silicon-based negative electrode active material content |
|---|---|---|---|
| Example 4 | Artificial graphite: Natural graphite = 2:1 (wt.%/wt.%) | Artificial graphite: Low-swelling natural graphite = 1:1 (wt.%/wt.%) | 12 wt.% |
| Example 5 | Artificial graphite: Natural graphite = 2:1 (wt.%/wt.%) | Artificial graphite = 100 wt.% | 12 wt.% |
| Example 6 | Artificial graphite: Low-swelling natural graphite = 2:1 (wt.%/wt.%) | Artificial graphite = 100 wt.% | 30 wt.% |
| Example 7 | Artificial graphite: Low-swelling natural graphite = 2:1 (wt.%/wt.%) | Artificial graphite = 100 wt.% | 12 wt.% |
| Comparative Example 1 | Artificial graphite: Low-swelling natural graphite = 2:1 (wt.%/wt.%) | Artificial graphite = 100 wt.% | 12 wt.% |
| Comparative Example 2 | Artificial graphite: Low-swelling natural graphite = 2:1 (wt.%/wt.%) | Artificial graphite = 100 wt.% | 0 wt.% |

[Table 2]

|  | Whether magnetic field was applied | Magnetic field strength |
|---|---|---|
| Example 1 | O | 6,000±500 G |
| Example 2 | O | 6,000±500 G |
| Example 3 | O | 6,000±500 G |
| Example 4 | O | 6,000±500 G |
| Example 5 | O | 6,000±500 G |
| Example 6 | O | 6,000±500 G |
| Example 7 | O | 10,000±500 G |
| Comparative Example 1 | X | - |
| Comparative Example 2 | O | 6,000±500 G |

[Table 3]

|  | $SL_{60-120}/FL_{60-120}$ | $SL_{60-120}$ |
|---|---|---|
| Example 1 | 0.75 | 9.44 |
| Example 2 | 0.78 | 9.57 |
| Example 3 | 0.83 | 9.68 |
| Example 4 | 0.98 | 9.27 |
| Example 5 | 0.93 | 10.21 |
| Example 6 | 0.51 | 13.98 |
| Example 7 | 0.63 | 17.95 |
| Comparative Example 1 | 1.74 | 24.14 |
| Comparative Example 2 | 1.92 | 29.20 |

[Table 4]

|  | $FL_{30-150}$ |
|---|---|
| Example 1 | 54.33 |
| Example 2 | 54.15 |
| Example 3 | 54.26 |
| Example 4 | 54.19 |
| Example 5 | 54.27 |
| Example 6 | 53.97 |
| Example 7 | 54.00 |
| Comparative Example 1 | 38.50 |
| Comparative Example 2 | 51.32 |

**Examples 8 to 14 and Comparative Examples 3 to 4. Manufacturing of Lithium Secondary Battery**

$LiNi_{0.7}Co_{0.1}Mn_{0.1}Al_{0.1}O_2$ having a particle size of 5 $\mu$m was prepared as a positive electrode active material, mixed with a carbon-based conductive material and polyvinylidene fluoride as a binder in N-methyl pyrrolidone (NMP) at a weight ratio of 94:3:3 to form a slurry, cast on an aluminum thin plate, dried in a vacuum oven at 120°C, and then rolled to manufacture a positive electrode.

A separator made of polypropylene having a thickness of 14 $\mu$m was interposed between the obtained positive electrode and the negative electrodes manufactured in Examples 1 to 7 and Comparative Examples 1 to 2, respectively, inserted into a case, and then an electrolyte composition was injected to assemble a 1 Ah-class lithium secondary battery.

At this time, the type of negative electrode applied to each lithium secondary battery is shown in Table 5 below.

[Table 5]

|  | Type of applied negative electrode |
|---|---|
| Example 8 | Negative electrode manufactured in Example 1 |
| Example 9 | Negative electrode manufactured in Example 2 |
| Example 10 | Negative electrode manufactured in Example 3 |
| Example 11 | Negative electrode manufactured in Example 4 |
| Example 12 | Negative electrode manufactured in Example 5 |
| Example 13 | Negative electrode manufactured in Example 6 |
| Example 14 | Negative electrode manufactured in Example 7 |
| Comparative Example 3 | Negative electrode manufactured in Comparative Example 1 |
| Comparative Example 4 | Negative electrode manufactured in Comparative Example 2 |

**Experimental Example.**

The following experiments were performed to evaluate physical properties and performance of the negative electrode manufactured according to the present disclosure.

1)Rapid charging performance evaluation

A positive electrode was manufactured in the same manner as in Examples 8 to 14 and Comparative Examples 3 to 4, and separately, a $Li_4Ti_5O_{12}$ (LTO) electrode was prepared.

A separator was interposed between the prepared positive electrode and LTO electrode and the negative electrodes prepared in Examples 1 to 7 and Comparative Examples 1 to 2, and a three-electrode cell was manufactured by coating a copper wire on the stacked LTO electrode for assembly.

Charge and discharge between the positive electrode and the LTO electrode were performed so that the state of charge (SOC) of the LTO electrode became 50%, and the three-electrode cell was charged and adjusted to have a potential of 1.53 V.

Charge and discharge of the three-electrode cell were performed while measuring voltage between the positive electrode and the LTO electrode, and between the positive electrode and the negative electrode using an EC-Lab charge/discharge device. At this time, the charging was performed under constant current conditions of 0.5 C, 1.0 C, 1.5 C, 2.0 C, 2.5 C, or 3.0 C, respectively, and after confirming depth of charge under each C-rate condition, charging time was calculated. In addition, for the depth of charge, a negative electrode voltage profile was confirmed, and when a plateau was confirmed in the negative electrode profile during charging, that point was determined as charge capacity (depth of charge). The calculated charging time required is shown in Table 6 below.

2) Energy density measurement

The loading amount per unit area and porosity of the negative electrodes for lithium secondary batteries manufactured in Examples 1 to 7 and Comparative Examples 1 to 2 were measured. At this time, the loading amount was calculated by measuring area and weight of each negative electrode, respectively. In addition, for the porosity, each negative electrode was impregnated in polydimethylsiloxane (PDMS) for 7 days to fill polydimethylsiloxane in pores of the negative electrode active layer. Then, argon ion milling (Ar+ ion milling) was performed under an acceleration voltage condition of 6 kV on a thickness direction cross-section of each negative electrode, and scanning electron microscopy (SEM) analysis of the cross-section of the ion-milled negative electrode active layer was performed under conditions of an acceleration voltage of 5 kV and a working distance of 7 mm. The ion milling was performed with IM5000 from Hitachi, and the scanning electron microscopy analysis was performed with IT800SHL from JEOL. The analyzed scanning electron microscopy (SEM) images were cropped and equally divided. A ratio of each component and pores included in the negative electrode active layer was calculated from each divided image, and a volume fraction occupied by the porosity of the negative electrode active layer was calculated from their average value, and the calculated volume fraction was taken as the porosity (%) of the negative electrode active layer.

Thereafter, energy density of a large secondary battery cell was calculated using the measured loading amount per unit area and porosity. At this time, the large secondary battery cell was designed as a cell having a size of 99.7 mm $\times$ 301.5 mm $\times$ 8.2 mm satisfying a discharge capacity of 40 Ah under conditions of 1/3 C. The results are shown in Table 6 below.

3) Lifespan characteristics

Charge and discharge capacity retention rates under room temperature conditions were measured for the lithium secondary batteries manufactured in Examples 8 to 14 and Comparative Examples 3 to 4. Specifically, charging was performed at a constant current of 1 C until voltage reached 4.25 V at 22$\pm$3°C, and discharging at a constant current of 1 C until voltage reached 2.5 V was set as 1 cycle, and then 300 cycles of charge and discharge were performed for each lithium secondary battery.

At this time, charge capacity of the 1st cycle and charge capacity of the 300th cycle during charge and discharge of each lithium secondary battery were measured. Charge capacity retention rate of the 300th cycle based on the measured charge capacity of the 1st cycle was calculated to evaluate capacity retention rate of each lithium secondary battery. The results are shown in Table 6 below.

[Table 6]

| | Rapid charging time required [min] | Energy density [Wh/L] | 300th cycle Capacity retention rate |
|---|---|---|---|
| Example 8 | 27.1 | 598.1 | 86.4 |
| Example 9 | 27.4 | 596.1 | 86.0 |
| Example 10 | 27.6 | 597.0 | 84.7 |
| Example 11 | 28.0 | 598.0 | 83.8 |
| Example 12 | 28.6 | 598.0 | 83.1 |
| Example 13 | 30.7 | 620.2 | 85.2 |
| Example 14 | 29.5 | 601.8 | 83.3 |
| Comparative Example 3 | 42.1 | 594.5 | 71.2 |
| Comparative Example 4 | 27.0 | 573.0 | 78.6 |

As shown in Table 6 above, it can be seen that the negative electrode according to the present disclosure has excellent rapid charging performance while simultaneously having excellent energy density and lifespan characteristics.

Specifically, it was confirmed that the lithium secondary batteries manufactured in Examples had a time required to charge to depth of charge of 30 minutes or less. In addition, the lithium secondary batteries manufactured in Examples exhibited high energy density of approximately 595 Wh/L or more, and it was confirmed that capacity retention rate was approximately 80% or more after 300 cycles of charge and discharge.

This means that when particle orientation of the carbon-based negative electrode active material according to position of the negative electrode active layer is controlled while comprising a silicon-based negative electrode active material, not only is energy density of the negative electrode improved, but also rapid charging performance and lifespan characteristics are improved.

From these results, it can be seen that the negative electrode according to the present disclosure has excellent rapid charging performance, energy density, and lifespan characteristics.

While the present disclosure has been described with reference to preferred embodiments of the present disclosure, it will be understood by those skilled in the art that various modifications and variations can be made therein without departing from the scope of the present disclosure as defined by the appended claims.

Therefore, the scope of the present disclosure should not be limited by the detailed description of the specification but should be determined by the appended claims.

**Claims**

1. A negative electrode, comprising:

    a negative electrode current collector;
    a first negative electrode active layer provided on at least one surface of the negative electrode current collector and comprising a first carbon-based negative electrode active material; and
    a second negative electrode active layer provided on the first negative electrode active layer and comprising a second carbon-based negative electrode active material and a silicon-based negative electrode active material;
    wherein, when analyzing a thickness direction cross-section of an entire negative electrode active layer comprising the first negative electrode active layer and the second negative electrode active layer by scanning electron microscopy, the first carbon-based negative electrode active material and the second carbon-based negative electrode active material satisfy Equation 1 below:

    [Equation 1]

    $$0.1 \leq SL_{60\text{-}120}/FL_{60\text{-}120} < 1.0$$

    In the above Equation 1,
    wherein $FL_{60\text{-}120}$ represents a percentage (unit: %) of the first carbon-based negative electrode active material in which an angle formed between a major axis of the first carbon-based negative electrode active material and a surface of the negative electrode current collector is greater than 60° and 120° or less among the first carbon-based negative electrode active material,
    wherein $SL_{60\text{-}120}$ represents a percentage (unit: %) of the second carbon-based negative electrode active material in which an angle formed between a major axis of the second carbon-based negative electrode active material and a surface of the negative electrode current collector is greater than 60° and 120° or less among the second carbon-based negative electrode active material, and
    wherein the major axis of the carbon-based negative electrode active material means a longest line segment among line segments passing through a center of the corresponding carbon-based negative electrode active material in an image photographed by scanning electron microscopy.

2. The negative electrode of claim 1, wherein the negative electrode satisfies any one or more of Equation 2 and Equation 3 below when analyzed by scanning electron microscopy for the thickness direction cross-section:

    [Equation 2]

    $$40 \leq FL_{30\text{-}150} \leq 70$$

[Equation 3]

$$5 \leq SL_{60\text{-}120} \leq 20$$

In the above Equation 2 and Equation 3,

wherein $FL_{30\text{-}150}$ represents a ratio (unit: %) of the first carbon-based negative electrode active material in which an angle formed between a major axis of the first carbon-based negative electrode active material and a surface of the negative electrode current collector is greater than 30° and 150° or less among the first carbon-based negative electrode active material,

wherein $SL_{60\text{-}120}$ represents a ratio (unit: %) of the second carbon-based negative electrode active material in which an angle formed between a major axis of the second carbon-based negative electrode active material and a surface of the negative electrode current collector is greater than 60° and 120° or less among the second carbon-based negative electrode active material, and

wherein the major axis of the carbon-based negative electrode active material means a longest line segment among line segments passing through a center of the corresponding carbon-based negative electrode active material in an image photographed by scanning electron microscopy.

3. The negative electrode of claim 1, wherein the silicon-based negative electrode active material comprises one or more selected from silicon (Si), silicon carbide (SiC), a composite containing silicon (Si) and carbon (C), and silicon oxide ($SiO_q$, where $0.5 \leq q \leq 2.5$).

4. The negative electrode of claim 1, wherein the content of the silicon-based negative electrode active material is in a range of 0.1 wt.% to 30 wt.% based on the weight of the entire negative electrode active layer.

5. The negative electrode of claim 1, wherein an average particle diameter ($D_{50}$) of the silicon-based negative electrode active material is in a range of 1 $\mu$m to 20 $\mu$m.

6. The negative electrode of claim 1, wherein the first carbon-based negative electrode active material and the second carbon-based negative electrode active material each comprise one or more selected from natural graphite, artificial graphite, Kish graphite, pyrolytic carbon, carbon microbeads, mesophase calcined carbon based on tar and pitch, and graphitized coke.

7. The negative electrode of claim 1, wherein any one or more of the first carbon-based negative electrode active material and the second carbon-based negative electrode active material comprise graphite having a total pore volume in a range of $1 \times 10^{-5}$ $cm^3$/g to $1 \times 10^{-1}$ $cm^3$/g.

8. The negative electrode of claim 7, wherein the content of the graphite having a total pore volume in a range of $1 \times 10^{-5}$ $cm^3$/g to $1 \times 10^{-1}$ $cm^3$/g is in a range of 10 wt.% to 70 wt.% based on the total weight of the first carbon-based negative electrode active material or the second carbon-based negative electrode active material.

9. The negative electrode of claim 1, wherein a total thickness of the first negative electrode active layer and the second negative electrode active layer is in an average range of 50 $\mu$m to 400 $\mu$m, and an average thickness of the second negative electrode active layer has a ratio in a range of 80% to 150% based on an average thickness of the first negative electrode active layer.

10. A method of manufacturing a negative electrode, comprising:

coating a first negative electrode slurry comprising a first carbon-based negative electrode active material on at least one surface of a negative electrode current collector (S1);
coating a second negative electrode slurry comprising a second carbon-based negative electrode active material and a silicon-based negative electrode active material on the coated first negative electrode slurry (S2); and
applying a magnetic field to the coated first negative electrode slurry and second negative electrode slurry (S3);
wherein, when analyzing a thickness direction cross-section of an entire negative electrode active layer comprising the first negative electrode active layer and the second negative electrode active layer by scanning electron microscopy, the first carbon-based negative electrode active material and the second carbon-based negative electrode active material satisfy Equation 1 below:

[Equation 1]

$$0.1 \leq SL_{60\text{-}120}/FL_{60\text{-}120} < 1.0$$

In the above Equation 1,

wherein $FL_{60\text{-}120}$ represents a percentage of the first carbon-based negative electrode active material in which an angle formed between a major axis of the first carbon-based negative electrode active material and a surface of the negative electrode current collector is greater than 60° and 120° or less among the first carbon-based negative electrode active material,

wherein $SL_{60\text{-}120}$ represents a percentage of the second carbon-based negative electrode active material in which an angle formed between a major axis of the second carbon-based negative electrode active material and a surface of the negative electrode current collector is greater than 60° and 120° or less among the second carbon-based negative electrode active material, and

wherein the major axis of the carbon-based negative electrode active material means a longest line segment among line segments passing through a center of the corresponding carbon-based negative electrode active material in an image photographed by scanning electron microscopy.

11. The method of manufacturing the negative electrode of claim 10, wherein the silicon-based negative electrode active material comprises one or more selected from silicon (Si), silicon carbide (SiC), a composite containing silicon (Si) and carbon (C), and silicon oxide ($SiO_q$, where $0.5 \leq q \leq 2.5$).

12. The method of manufacturing the negative electrode of claim 10, wherein the first carbon-based negative electrode active material and the second carbon-based negative electrode active material each comprise one or more selected from natural graphite, artificial graphite, Kish graphite, pyrolytic carbon, carbon microbeads, mesophase calcined carbon based on tar and pitch, and graphitized coke.

13. The method of manufacturing the negative electrode of claim 10, wherein any one or more of the first carbon-based negative electrode active material and the second carbon-based negative electrode active material comprise graphite having a total pore volume in a range of $1 \times 10^{-5}$ cm$^3$/g to $1 \times 10^{-1}$ cm$^3$/g.

14. The method of manufacturing the negative electrode of claim 10, wherein the magnetic field is performed at a magnetic field strength of 1,000 G to 12,000 G.

【FIG. 1】

current collector

【FIG. 2】

Example 3

the 1st negative electrode active layer

the 2nd negative electrode active layer

【FIG. 3】

Example 6

| the 1st negative electrode active layer | the 2nd negative electrode active layer |

【FIG. 4】

Comparative Example 1

the 1st negative
electrode active layer

the 2nd negative
electrode active layer

5,00kV   WD=7.0mm  X1.2k          10μm

5,00kV   WD=7.0mm  X1.2k          10μm

## INTERNATIONAL SEARCH REPORT

| | International application No. |
|---|---|
| | **PCT/KR2025/010181** |

**A.    CLASSIFICATION OF SUBJECT MATTER**

**H01M 4/133**(2010.01)i; **H01M 4/134**(2010.01)i; **H01M 4/587**(2010.01)i; **H01M 4/36**(2006.01)i; **H01M 4/38**(2006.01)i; **H01M 4/48**(2010.01)i; **H01M 4/1393**(2010.01)i; **H01M 4/1395**(2010.01)i; **H01M 4/04**(2006.01)i; **H01F 7/02**(2006.01)i

According to International Patent Classification (IPC) or to both national classification and IPC

**B.    FIELDS SEARCHED**

Minimum documentation searched (classification system followed by classification symbols)

H01M 4/133(2010.01); H01M 10/0525(2010.01); H01M 4/02(2006.01); H01M 4/134(2010.01); H01M 4/1393(2010.01); H01M 4/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 음극(anode), 집전체(current collector), 활성물질(active material), 탄소(carbon), 규소(silicon), 흑연(graphite), 수명(lifetime), 기공 부피(pore volume), 급속 충전(fast charging), 자장(magnetic field)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2676168 B1 (LG ENERGY SOLUTION, LTD.) 20 June 2024 (2024-06-20)<br>claims 1, 8; paragraphs [0096]-[0105], [0131]-[0137], [0196] | 1-6,9-12,14 |
| Y | | 7,8,13 |
| Y | KR 10-2023-0094817 A (LG ENERGY SOLUTION, LTD.) 28 June 2023 (2023-06-28)<br>paragraphs [0038]-[0043] | 7,8,13 |
| Y | KR 10-2020-0088237 A (LG CHEM, LTD.) 22 July 2020 (2020-07-22)<br>claim 1; paragraph [0050] | 7,8,13 |
| A | WO 2024-008693 A1 (NORTHVOLT AB) 11 January 2024 (2024-01-11)<br>claims 1, 2 | 1-14 |
| A | KR 10-2536147 B1 (LG ENERGY SOLUTION, LTD.) 26 May 2023 (2023-05-26)<br>claims 1, 8 | 1-14 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 October 2025** | **13 October 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2025/010181**

| Patent document cited in search report | | | Publication date (day/month/year) | Patent family member(s) | | | Publication date (day/month/year) |
|---|---|---|---|---|---|---|---|
| KR | 10-2676168 | B1 | 20 June 2024 | CN | 119768930 | A | 04 April 2025 |
| | | | | EP | 4560724 | A1 | 28 May 2025 |
| | | | | JP | 2025-528268 | A | 26 August 2025 |
| | | | | WO | 2024-258267 | A1 | 19 December 2024 |
| KR | 10-2023-0094817 | A | 28 June 2023 | CA | 3241251 | A1 | 29 June 2023 |
| | | | | CN | 118355522 | A | 16 July 2024 |
| | | | | EP | 4428943 | A1 | 11 September 2024 |
| | | | | JP | 2024-542625 | A | 15 November 2024 |
| | | | | US | 2024-0322140 | A1 | 26 September 2024 |
| | | | | WO | 2023-121247 | A1 | 29 June 2023 |
| KR | 10-2020-0088237 | A | 22 July 2020 | CN | 113614950 | A | 05 November 2021 |
| | | | | CN | 113614950 | B | 14 February 2025 |
| | | | | EP | 3890061 | A1 | 06 October 2021 |
| | | | | US | 12080873 | B2 | 03 September 2024 |
| | | | | US | 2022-0077451 | A1 | 10 March 2022 |
| | | | | WO | 2020-149622 | A1 | 23 July 2020 |
| WO | 2024-008693 | A1 | 11 January 2024 | SE | 2250838 | A1 | 05 January 2024 |
| KR | 10-2536147 | B1 | 26 May 2023 | CN | 118749141 | A | 08 October 2024 |
| | | | | EP | 4465380 | A1 | 20 November 2024 |
| | | | | JP | 2025-508612 | A | 27 March 2025 |
| | | | | JP | 7648300 | B1 | 18 March 2025 |
| | | | | US | 2025-0112262 | A1 | 03 April 2025 |
| | | | | WO | 2024-111906 | A1 | 30 May 2024 |

Form PCT/ISA/210 (patent family annex) (July 2022)

**REFERENCES CITED IN THE DESCRIPTION**

**Patent documents cited in the description**

- KR 1020240097947
- KR 1020240146303
- KR 1020250019146
- KR 1020240084840